# EUROPÄISCHE PATENTSCHRIFT

(11) **EP 2 344 810 B1**
(45) Veröffentlichungstag und Bekanntmachung des Hinweises auf die Patenterteilung: **07.05.2014**
(21) Anmeldenummer: 09748248.3
(22) Anmeldetag: 28.10.2009
(51) Int. Cl.: F23B 80/02, F23C 6/04, F23C 9/06, F23G 5/16, F23G 7/06, F23G 7/10, F23J 15/02, F23J 15/06

(54) **VERFAHREN UND VORRICHTUNG ZUR REDUZIERUNG VON SCHADSTOFFEMISSIONEN IN VERBRENNUNGSANLAGEN**
METHOD AND DEVICE FOR REDUCING HAZARDOUS EMISSIONS IN INTERNAL COMBUSTION SYSTEMS
PROCÉDÉ ET DISPOSITIF POUR RÉDUIRE LES ÉMISSIONS DE SUBSTANCES POLLUANTES DANS DES INCINÉRATEURS

(30) Priorität: 30.10.2008 DE 102008054038
(43) Veröffentlichungstag der Anmeldung: 20.07.2011
(73) Patentinhaber: Karlsruher Institut für Technologie, 76131 Karlsruhe (DE)
(72) Erfinder: HUNSINGER, Hans, 76356 Weingarten (DE)
(74) Vertreter: Gärtner, Stephan
(86) Internationale Anmeldenummer: PCT/EP2009/007690
(87) Internationale Veröffentlichungsnummer: WO 2010/049127

(56) Entgegenhaltungen:
- EP-A1- 1 901 003
- EP-A2- 0 770 823
- EP-A2- 1 479 455
- US-A- 5 205 227
- US-A- 5 797 332

## Beschreibung

Die Erfindung betrifft eine Vorrichtung sowie ein Verfahren zur Reduzierung von Schadstoffemissionen in Verbrennungsanlagen mit einem Hauptbrennraum und einem Nebenbrennraum gemäß des ersten und des zweiten Patentanspruchs. Das Verfahren und die Vorrichtung eignen sich ferner gleichermaßen zur signifikanten Steigerung der Energieausnutzungseffizienz aus dem Verbrennungsprozess z.B. bei der Gewinnung von elektrischer Energie.

Verbrennungsprozesse bei denen z.B. schwefel-, stickstoff- und chlorhaltige Brennstoffe verbrannt werden, setzen grundsätzlich Schwefeloxide, Stickoxide und Salzsäure sowie chlorierte organische Verbindungen wie z.B. polychlorierte Dibenzo-p-dioxine und Dibenzofurane (PCDD/F) frei. Alle diese Schadstoffe unterliegen aufgrund ihrer Toxizität oftmals nationalen Emissionsgrenzwerten und sind beispielsweise für die Bundesrepublik Deutschland vom Gesetzgeber in der 17. Bundesimmissionsschutzverordnung (17.BImSchV) für Müllverbrennungsanlagen festgeschrieben.

In technischen Feuerungen erfolgt die Verbrennung von festen Brennstoffen üblicherweise in zwei Stufen. Der Festbrennstoffabbrand erfolgt in einem ersten Schritt durch Zugabe von sauerstoffhaltigem Primärgas (Primärluft). Die Zufuhr an sauerstoffhaltigem Primärgas (Primärluft) erfolgt meist unterstöchiometrisch. Der daraus resultierende auf einen lokalen Sauerstoffmangel im Brennbett zurückzuführende unvollständige Ausbrand der primär gebildeten Rauchgase erfordert die weitere Zugabe und Vermischung von sauerstoffhaltigem Sekundärgas (Sekundärluft) in das heiße noch heizwertreiche primär gebildete Rauchgas im überstöchiometrischen Verhältnis wodurch eine Nachverbrennung eingeleitet wird.

Feste Brennstoffe wie z.B. Hausmüll und Biomasse aber auch Kohle werden häufig in Rost-, Wirbelschicht-, oder auch Drehrohrfeuerungen verbrannt. Insbesondere Hausmüll und Biomasse zeichnen sich häufig durch eine hohe Inhomogenität bezüglich Heizwert, Aschegehalt, Feuchtegehalt, stoffliche Zusammensetzung und/oder der Partikelgröße aus.

In Rostfeuerungen wird der feste Brennstoff meist ohne aufwendige Aufbereitung auf einem in mehrere Rostzonen unterteilten Verbrennungsrost transportiert und bei kontrollierter individueller Zufuhr von Primärluft in die einzelnen Rostzonen ausgebrannt. Der Abbrand fester Brennstoffe kann idealisiert in die nacheinander ablaufenden Teilprozesse Trocknung, Entgasung und Abbrand des fixen Kohlenstoffes unterteilt werden. Aufgrund der meist schlechten Vermischung der festen oftmals inhomogenen Brennstoffe oder Brennstoffmischungen in der Brennbettschüttung können sich beim Transport auf Verbrennungsrosten diese Teilprozesse überlagern. Im vorderen Rostbereich erfolgt hauptsächlich die Trocknung hervorgerufen durch intensive Wärmeeinstrahlung der heißen Brenngase aus der Hauptbrennkammer und/oder von den heißen Brennkammerwänden/-decke und/oder durch Zuführung von vorgewärmter Primärluft. Bei der Trocknung wird der mit der Primärluft zugeführte Sauerstoff nicht verbraucht. Bei weiterer Temperaturerhöhung werden bei der nachfolgenden Brennstoffentgasung große Mengen an flüchtigen Kohlenwasserstoffen aus dem Brennstoffbett freigesetzt. In diesem Rostbereich findet der höchste lokale Kohlenstoffumsatz statt. Abhängig von den lokalen Temperaturen und der O₂-Konzentration im Brennstoffbett werden die freigesetzten Kohlenwasserstoffe gezündet und vollständig oder teilweise verbrannt. Bei (lokal) unterstöchiometrischer Sauerstoffzufuhr verbleiben nach vollständigem Verbrauch des Sauerstoffangebots in der Hauptverbrennungszone erhebliche Mengen an unverbrannten Kohlenwasserstoffen im Abgas und werden bei hohen Temperaturen durch Vergasungsreaktionen zum Teil in CO, H₂ und Ruß umgesetzt. Diese primär gebildeten Rauchgase in der Hauptverbrennungszone sind sehr heizwertreich.

Parallel zur Entgasung werden aus dem Brennstoffstickstoff flüchtige stickstoffhaltige Verbindungen (N-Spezies), hauptsächlich NH₃ (Ammoniak) und in geringerem Umfang HCN (Blausäure) und stickstoffhaltige Kohlenwasserstoffe gebildet. Diese primären N-Spezies werden abhängig von den lokalen O₂-Konzentrationen und Temperaturen im Brennbett vollständig oder teilweise zu NO oxidiert. Bei Sauerstoffmangel (in der Hauptverbrennungszone) verbleiben erhebliche Mengen von flüchtigen Stickstoffverbindungen insbesondere an NH₃ im aus dem Brennbett austretenden heizwertreichen Rauchgas.

Die thermisch instabilen schwefelhaltigen Verbindungen des Brennstoffs werden unter Sauerstoffmangelbedingungen im Bereich der Hauptverbrennungszone überwiegend als Schwefelwasserstoff (H₂S) freigesetzt.

Aus den chlorhaltigen Verbindungen des Brennstoffs (z.B. PVC und aus anorganische Chloriden wie z.B. NaCl) wird beim Feststoffabbrand hauptsächlich Salzsäure gebildet. Ein geringerer Teil wird in Form von flüchtigen anorganischen Chloriden (z.B. Alkali-, Schwermetallchloride) oder auch organische Chlorverbindungen (z.B. Chlorbenzole) ins Rauchgas freigesetzt.

Am hinteren Rostbereich erfolgt der Abbrand des nach der Entgasung verbleibenden fixen Kohlenstoffes bei lokal überstöchiometrischer Primärluftzufuhr. Durch die in diesem Rostbereich meist im erheblichen Überschuss zugeführte Primärluftmenge sinkt die Brennbetttemperatur wodurch die Kinetik des Restkohlenstoffumsatzes relativ langsam verläuft. Eine Temperaturerhöhung im Schlackebett am Ende des Rostes beschleunigt bei ausreichendem Sauerstoffangebot den Kohlenstoffabbrand und gewährleistet so niedrige Restkohlenstoffgehalte (TOC) in der ausgetragenen Schlacke.

Der Stickstoffgehalt des nach der Entgasung gebildeten Restkokses ist relativ niedrig. Beim Abbrand unter O₂-Überschuss wird hauptsächlich NO (Stickstoffmonoxid) gebildet. Die Primärluftmenge und -Verteilung sowie die Rostkinematik haben einen signifikanten Einfluss auf den Verlauf des Brennbettabbrandes beim Transport auf dem Verbrennungsrost und beeinflussen dadurch die axiale Verteilungen von Temperaturen, O₂-Konzentrationen, Rauchgasheizwerten und das NH₃/NO-Verhältnis in den aus den einzelnen Brennbettzonen freigesetzten Rauchgasströmen.

Die primär beim Feststoffabbrand gebildeten Rauchgase insbesondere die sauerstoffreien und heizwertreichen Rauchgase aus der Hauptverbrennungszone (O₂-Minimum) müssen in einem zweiten Verbrennungsschritt durch überstöchiometrische Zuführung und Vermischung mit sauerstoffhaltigem Sekundärgas (Sekundärluft) bei hohen Temperaturen möglichst vollständig ausgebrannt werden.

Im Bereich dieser Abgasausbrandzone werden aus den beim Feststoffabbrand primär gebildeten N-Spezies über komplexe Reaktionen letztendlich Stickstoffoxide (NOₓ, überwiegend Stickstoffmonoxid NO)und/oder Distickstoffoxid (N₂O) und/oder Stickstoff (N₂) gebildet. Der Heizwert und das NH₃/NO-Verhältnis der Rauchgase vor Eintritt in die Hauptabgasausbrandzone und die lokale Verteilung von Temperaturen und Sauerstoffkonzentrationen während des Abgasausbrandes haben einen entscheidenden Einfluss auf die final resultierende N-Speziesverteilung im Rauchgas nach der Abgasausbrandzone. Unter idealen Bedingungen reagieren NH₃ und NO während des Abgasausbrandes durch einen autogenen SNCR-Prozess zu N₂.

Die Stöchiometrie der Primärluftzufuhr (Summe aller Primärluftströme) in Rostfeuerungen zur Hausmüllverbrennung liegt üblicherweise im Bereich von 0.6 bis 1.2. In Müllverbrennungsanlagen wird die Sekundärluft so geregelt, dass die Verbrennungstemperaturen im Rauchgas nach Sekundärgaszugabe für eine Verweilzeit über zwei Sekunden oberhalb von 850°C eingehalten werden. Der Sauerstoffgehalt im ausgebrannten Rauchgas liegt meist im Bereich von etwa 5-12 Vol.%. Die Nutzung der bei der Verbrennung freigesetzten Energie wird meist zur Dampferzeugung mittels Dampfkessel verwendet. Der oftmals relativ hohe Luftüberschuss und die meist relativ hohen Temperaturen im Rauchgas nach dem Dampfkessel (180-250°C, d.h. oberhalb des Säuretaupunktes) verursachen einen erheblichen Energieverlust bei der Wärmenutzung der im Rauchgas enthaltenen thermischen Energie in einem Dampfkessel. Der Kesselwirkungsgrad (Verhältnis des Energieinhaltes des erzeugten Dampfes/ Energieeintrag des Brennstoffes) liegt bei der Abfallverbrennung im Bereich von 80-85%. Bei der Kohleverbrennung ca. 93%. Ansätze zur Reduzierung von Schadstoffemissionen bei Verbrennungsprozessen sind hinlänglich bekannt. Sie umfassen nicht nur Maßnahmen zur nachträglichen Rauchgasreinigung, sondern auch Primärmaßnahmen zur Reduzierung der Schadstoffbildungsraten.

Beispielweise beschreibt EP 1 901 003 A1 ein Verfahren und eine Vorrichtung zur Reduzierung von Schadstoffemissionen in Verbrennungsanlagen für feste Brennstoffe mit einem zweistufigem Hauptverbrennungsprozess, umfassend eine Hauptfeuerung mit einer Hauptbrennkammer und eine Hauptrauchgasnachbrennkammer, eine Festbrennstoffausbrandzone, sowie einen separaten Nebenverbrennungsstrang, wobei in der Hauptbrennkammer ein Ausbrand des festen Brennstoffs unter unterstöchiometrischer Primärgaszufuhr erfolgt und dabei ein heizwertreiches Brenngas und ein kohlenstoffarmer fester Rückstand gebildet wird; wobei ein Teilstrom des beim Ausbrand des Brennstoffs gebildeten heizwertreichen Brenngases vor Eintritt in die Hauptrauchgasnachbrennkammer abgezweigt wird, während der verbleibende restliche Brenngastrom, der nicht abgesaugt wird, die Hauptbrennkammer durchströmt, und wobei das ausgebrannte Abgas aus dem Nebenverbrennungsstrang der Hauptfeuerung vor der Hauptrauchgasnachbrennkammer zurückgeführt wird und zusammen mit dem Brenngastrom in der Hauptrauchgasnachbrennkammer unter Zugabe eines sauerstoffhaltigen Sekundärgases ausgebrannt und einem Hauptdampferzeuger und einer Hauptrauchgasreinigung zugeführt wird.

Die DE 103 38 752 B9 offenbart ein Verfahren zur Reduzierung von polyhalogenierten Verbindungen wie PCDD/F in Verbrennungsanlagen mit mindestens einem Brennraum, indem SO₂ aus dem Rauchgas in mindestens einem Wäscher selektiv abgeschieden wird und in den Brennraum rezykliert wird. Die durch die Erhöhung der SO₂-Konzentration (im Rauchgas nach der Abgasausbrandzone) hervorgerufene Sulfatierung der chloridhaltigen Flugasche mindert die PCDD/F-Bildung signifikant. Sulfatierte Flugasche mit niedriger Chloridkonzentration verursachen auch deutlich weniger Korrosionsprobleme der Kesselwerkstoffe des Dampfkessels.

Ferner offenbart die DE 10 2006 016 963 B3 ein Verfahren, bei dem Schwefeldioxid SO₂ aus dem Rauchgas in mindestens einem Wäscher mittels Ammoniak oder Ammoniumverbindungen selektiv abgeschieden wird, wobei sich eine wässrige Ammoniumsulfat-/-sulfitlösung bildet, die ganz oder teilweise in den Brennraum rezykliert wird und bei der thermischen Zersetzung ebenfalls zur Erhöhung der SO₂-Konzentration führt.

Ferner offenbart DE 10 2006 005 464 B3 ein Verfahren zur primärseitigen NOₓ-Minderung durch axiale Vermischung aller aus dem Brennbett einer Rostfeuerung austretenden Rauchgasströme vor Eintritt in die Rauchgasausbrandzone bei gleichzeitiger Temperaturkontrolle mittels geregeltem Gas-/Wasserfreistrahl.

Ferner sind aus der Literatur Ansätze bekannt, mehrere verschiedene Verbrennungsprozesse mit dem Ziel einer erhöhten Energieausnutzung miteinander zu kombinieren.

Beispielsweise offenbart die DE 10 2005 036 792 A1 eine Anlage mit zwei getrennten Feuerungen, aber mit einer teilweise gemeinsam genutzten Abgasreinigung. Im Rahmen dessen erfolgte eine dampfseitige Kopplung einer ersten Verbrennungsanlage (für Abfall, Biomasse oder anderen Ersatzbrennstoffen) mit einer mit fossilen Brennstoffen (wie z.B. Steinkohle, Braunkohle, Erdgas, Öl) befeuerten zweiten Verbrennungsanlage (z.B. zirkulierende Wirbelschichtverbrennung). Insbesondere chlorhaltige Brennstoffe bilden bei der Verbrennung stark korrosive Rauchgase. Um die Korrosion im Kessel zu begrenzen wird in der Abfallfeuerung Sattdampf oder leicht überhitzter Dampf auf relativ niedrigem Temperaturniveau erzeugt. Der relativ niederkalorische Primärdampf wird dann mit dem Ziel einer Wirkungsgraderhöhung bei einer elektrischen Energieerzeugung mittels Dampfkraftprozess in der zweiten fossil befeuerten Verbrennungsanlage weiter überhitzt. Das offenbarte Konzept ist jedoch aufwendig und benötigt eine simultane Zufuhr von zwei verschiedenen Brennstoffströmen in zwei getrennten Verbrennungsanlagen.

Auch die DE 43 00 192 C2 beschreibt eine Verknüpfung von zwei Abhitzeprozessen zur Erzeugung von überhitztem hochkalorischem Dampf, wobei der erste Prozess als mögliche Abfallverbrennung zur Erzeugung von Sattdampf dient. Die Überhitzung des Sattdampfes erfolgt im zweiten Prozess in einem z.B. mit dem Abgas einer Gasturbine geheizten Kessel. Auch dieses Konzept benötigt zwei verschiedene Brennstoffströme.

Auch die EP 0 593 999 B1 sowie die DE 19 15 852 C3 offenbaren ein Verfahren zur Energiegewinnung in Müll- oder Sondermüllverbrennungsanlagen. Während bei der Müllverbrennung Sattdampf erzeugt wird, erfolgt eine Überhitzung desselbigen in einem zweiten Heizkessel mit Regelbrennstoff wie z.B. Erdgas (EP 0 593 999 B1) bzw. Öl oder Kohle (DE 19 15 852 C3), d.h. ebenfalls mit einem zweiten fossilen Brennstoff.

Dagegen offenbart die EP 0 823 590 B1 ein Verfahren zur Erzeugung von Wasserdampf mit einer Dampftemperatur 200-320°C mittels chlorhaltiger Energiequelle (z.B. Abfall), das im Gegensatz zu dem vorgenannten Stand der Technik nur mit einem Brennstoff betrieben wird. In einer Wirbelschicht-Pyrolyseanlage wird zerkleinerter Abfall bei geringer Luftzufuhr erhitzt. In einer ersten Verbrennung werden in die bei der Müllpyrolyse bei 300-500°C freigesetzten chlorhaltigen Pyrolysegase verbrannt und Wasserdampf mit einer Temperatur von unter 400°C erzeugt. Die im Pyrolysegas enthaltenen Stickstoffverbindungen bilden bei der Verbrennung erhebliche Mengen an Stickoxiden und müssen durch aufwendige Abgasreinigungsverfahren abgeschieden werden. Der kokshaltige Pyrolyserückstand wird anschließend mechanisch aufbereitet (gesiebt und dabei grobe Bestandteile abgetrennt) und soll nach Abtrennung von Störstoffen im Wesentlichen chlorfrei sein. Durch Verbrennen dieses Restkokses (fixer Kohlenstoff) aus der Abfallpyrolyse erfolgt in einer zweiten Stufe die weitere Überhitzung des Wasserdampfes auf bis zu 520°C. Pyrolysekokse aus Abfallstoffen enthalten aber meist noch beachtliche Mengen an Alkali- und/oder Metallverbindungen insbesondere Chloride die bei der Verbrennung ins Abgas freigesetzt werden und sich teilweise auf den Wärmetauschflächen des Dampfüberhitzers ablagern können. Dadurch werden die bekannten Korrosionseffekte im Dampfkessel verursacht.

Davon ausgehend ist es **Aufgabe der Erfindung,** eine Vorrichtung und ein Verfahren zur Reduzierung von Schadstoffbildung und -emissionen in Verbrennungsanlagen für feste Brennstoffe und / oder festen Brennstoffmischungen mit einem zweistufigem Hauptverbrennungsprozess vorzuschlagen, das sich insbesondere auch für eine verbesserte Nutzung des gesamten Energieinhaltes der Brennstoffe mit hohem Wirkungsgrad zur Erzeugung von elektrischer Energie eignet und dabei grundsätzlich nur einen Festbrennstoffzustrom erfordert.

Die Aufgabe wird durch eine Vorrichtung mit den Merkmalen aus Anspruch 1 und ein Verfahren mit den Merkmalen aus Anspruch 2 gelöst. Die Unteransprüche geben vorteilhafte Ausführungsformen wieder.

Die Aufgabe wird mit einem Verfahren und Vorrichtung zur Reduzierung von Schadstoffemissionen in Verbrennungsanlagen für bevorzugt feste Brennstoffe mit einem zweistufigen Hauptverbrennungsprozess gelöst. Die Hauptverbrennung erfolgt in einer Festbrennstoffausbrandzone, Hauptbrennkammer und Hauptrauchgasnachbrennkammer. Bei der Hauptvebrennung erfolgt ein Ausbrand des festen Brennstoffs unter untertöchiometrischer Primärgaszufuhr (Sauerstoffmangel), wobei ein heizwertreiches Brenngas und ein kohlenstoffarmer fester Rückstand gebildet werden.

Wesentlich ist eine räumlich getrennte Nebenverbrennung für einen Teil der heizwertreichen primär beim Feststoffabbrand gebildeten Brenngase in einem Nebenverbrennungsstrang. Dieser Brenngasteilstrom wird über eine Abzweigung, vorzugsweise einer Brenngasabsaugung aus oder zwischen der Festbrennstoffausbrandzone und vor Eintritt in die Hauptrauchgasnachbrennkammer abgezweigt, während der verbleibende restliche Brenngastrom nach Durchlauf der Hauptbrennkammer und Zumischung des ausgebrannten Abgases aus der Nebenfeuerung in der Hauptrauchgasnachbrennkammer unter überstöchiometrischer sauerstoffhaltiger Sekundärgaszugabe ausgebrannt und einem Hauptdampferzeuger und einer Hauptrauchgasreinigung zugeführt wird.

Das Verfahren und damit die Vorrichtung zeichnen sich somit durch eine Aufteilung des Brenngasstroms nach der ersten Festbettverbrennungsstufe in zwei Stränge aus. Der abgezweigte heizwertreiche Brenngasteilstrom wird konditioniert (d.h. abgekühlt und gereinigt) und in der Nebenbrennkammer ausgebrannt und die freigesetzte Energie in einem seriell zum Hauptdampferzeuger geschalteten Nebendampfüberhitzer zur Erhöhung der Dampfenthalpie energetisch genutzt. Alternativ zur Nebendampfüberhitzung ist auch eine energetische Nutzung mittels einer Gasturbine oder Gasmotor oder Stirling Motor im Rahmen der Erfindung denkbar. Die Rückführung des ausgebrannten Nebenstromabgases zur Hauptfeuerung erfolgt vor der Hauptrauchgasausbrandzone um wieder vereint ausgebrannt und einer gemeinsamen (Rest-)Wärmenutzung im Hauptdampferzeuger und einer Hauptrauchgasabreinigung zugeführt zu werden.

Es liegt im Rahmen einer vorteilhaften Ausführungsform der Erfindung, das nachverbrannte Rauchgas aus dem Nebenverbrennungsstrang vor der Hauptnachverbrennungskammer einzuleiten. Mit der gezielten Einleitung von ausgebranntem Rauchgas aus der Nebenverbrennung vor der genannten Hauptnachverbrennungskammer sind in besonders vorteilhafter Weise eine Brenngaszusammensetzung und damit die Emissionszusammensetzung bei der Hauptnachverbrennung in der genannten Hauptnachbrennkammer einstellbar. Hiermit ist in besonders vorteilhafter Weise die Schadstoffbildung (insbes. PCDD/F und/oder NOₓ-Werte) beeinflussbar und der Aufwand einer nachfolgenden Hauptrauchgasreinigung reduzierbar. Die Qualität der festen Rückstände (Schlacke und Flugasche in der Hauptverbrennung) wird dabei nicht negativ beeinflusst.

Ebenso lassen sich auf diese Weise korrosionsfördernde Bestandteile im Rauchgas und damit mögliche Kesselkorrosion im Hauptdampferzeuger zusätzlich reduzieren. Vorzugsweise erfolgt dabei die Einstellung einer Zusammensetzung des eingeleiteten Rauchgases über die Brenngaskonditionierung der Nebenstromverbrennung (Abscheidung von Chloriden und HCl).

Im Nebenverbrennungsstrang erfolgt nachfolgend zur Abzweigung eine Brenngaskonditionierung der abgezweigten Brenngase (d.h. dem vorgenannten Teilstrom der Brenngase). Die Brenngaskonditionierung umfasst eine Temperierung der abgezweigten Brenngase vorzugsweise auf eine Temperatur zwischen 350 und 500°C, vorzugsweise zwischen 400 und 450°C, weiter bevorzugt zwischen 400 und 425°C. Diese Temperaturfenster liegen unterhalb der Kondensationstemperaturen und/oder Solidustemperaturen der meisten in den Brenngasen vorliegenden flüchtigen Alkali- und Schwermetallverbindungen, die bei der Abkühlung dann als Feststoffaerosol resublimiert oder an Asche- und Russpartikeln kondensiert gemeinsam mit diesen abgefiltert oder auf andere Weise abgeschieden werden. Diese Temperaturen sind auch ausreichend hoch um die Kondensation von schwer flüchtigen Kohlenwasserstoffen (Teer) zu verhindern.

Die Brennstoffkonditionierung umfasst nicht nur die vorgenannten Temperierungsmitteln (z.B. mit einem Wärmetauscher oder Wasserquench) sondern auch diesen vorzugsweise nachgeschaltete Mittel zur Brenngasreinigung. Die Brenngasreinigung dient nicht nur der vorgenannten Abscheidung der Alkali- und Schwermetallverbindungen insbesondere von Alkali- und Schwermetallchloriden gemeinsam mit Asche- und Russpartikel aus dem Brenngas, sondern auch der Abscheidung von korrosiven gasförmige Brenngasinhaltsstoffen, wie z.B. Säurebestandteile (z.B. HCl).

Eine Abscheidung der Säurebestandteile wie z.B. Salzsäure HCl erfolgt vorzugsweise durch eine Hinzudosierung eines Sorptionsmittels wie z.B. CaO (Kalziumoxid), CaOH (Kalziumhydroxid), und/oder CaCO₃ (Kalziumcarbonat) in das Brenngas. Das Sorptionsmittel, das als Feststoff, wässrige Lösung oder Suspension eingegeben wird, dient der Absorption der Säurebestandteile. Das gebildete feste Reaktionsprodukt wird aus dem Brenngas vor der Nebenbrennkammer abgefiltert.

Das konditionierte Brenngas ist nach der Abscheidestufe nicht nur von festen Schwebstoffen abgereinigt, sondern auch weitgehend frei von Salzsäure, Chloriden und Alkaliverbindungen. Das konditionierte Brenngas ermöglicht damit in besonders vorteilhafter Weise eine besonders schadstoffarme konventionelle Nachverbrennung (Nebenverbrennung) in einer Nebenbrenngasverbrennungskammer vorzugsweise unter überstöchiometrischer Zufuhr eines sauerstoffhaltigen Gases (Sekundärgas). Durch diese Nebenverbrennung entstehen heiße und korrosionsarme Abgase. Das bei der Verbrennung des gereinigten Brenngases gebildete Abgas ist bezüglich Kesselkorrosion mangels korrosionsfördernder Bestandteile nahezu unproblematisch. Das heiße korrosionsarme Abgas eignet sich folglich besonders für eine energetische Verwertung, vorzugsweise in Form einer Wärmeübertragung z.B. an metallischen Wärmeüberträgern auch bei erhöhten Temperaturen des Kesselwerkstoffes über 400°C, beispielsweise für eine Erzeugung von hoch überhitztem Wasserdampf aus dem vorgenannten Hauptdampferzeuger (Dampfüberhitzung). Dadurch ist eine sehr effiziente elektrische Energieerzeugung z.B. mit einer Dampfturbine analog zu einem typischen fossil befeuertem Kraftwerk möglich.

Ein besonderer Vorteil liegt darin, dass die Zuführung des gesamten festen Brennstoffstromes ausschließlich in den Hauptverbrennungsprozess, d.h. in die Festbrennstoffausbrandzone erfolgt. Folglich ist das Verfahren sowie die Vorrichtung zur Durchführung des Verfahrens so ausgelegt, dass der Festbrennstoff grundsätzlich, auf einem einzigen Festbrennstoffstrom (Monoverbrennung)mit einer Feststoffausbrandzone basiert.

Ferner zeichnet sich das Verfahren und die Vorrichtung durch eine grundsätzliche Möglichkeit einer Regelung des Volumenstromverhältnisses von Brenngasteilstrom zur Nebenfeuerung und des verbleibenden Brenngasstromes aus. Damit lassen sich nicht nur die Energiemengenströme in der Haupt- und Nebenfeuerung separat für eine kombinierte thermische Energienutzung aufeinander anpassen (z.B. Hauptdampferzeuger und nachfolgender Dampfendüberhitzung in der Nebenstromverbrennung), sondern auch für eine insgesamt schadstoffarme Verbrennung nutzen.

Die Monofeststoffverbrennung ist nämlich im Rahmen der Erfindung insbesondere mit einem minderwertigen Brennstoff, beispielsweise Hausmüll und ohne eine spezielle Brennstoffaufbereitung oder - selektierung von einzelnen Festbrennstofffraktion, z.B. Abfallfraktionen möglich, wobei die Verbrennung und die Schadstoffbildung beim Gesamtverbrennungsprozess nicht ,nur durch eine regelbare Aufteilung der Brenngase aus der Hauptfeuerung auf die vorhandenen Nachverbrennungsstränge (eine oder mehrere), sondern auch durch die genannte Brenngaskonditionierung vor einer Nachverbrennung in der Nebenfeuerung steuerbar ist und Einflüsse möglicher Brennstoffinhomogenitäten damit ausgleichbar sind. Eine Hausmüllverbrennung ist im Rahmen der Erfindung nicht nur mit kraftwerksähnlichem Wirkungsgrad bei der elektrischen Energieerzeugung ohne zusätzlichen Einsatz von fossilen Brennstoffen möglich, sondern auch mit einer geringen Schadstoffbildungsrate (insbesondere NOₓ und PCDD/F) und geringer Korrosionsneigung gegenüber Kesselmaterialien bei erhöhten Temperaturen insbesondere T>400°C. Ferner zeichnen sich auch die erzeugten festen Rückstande (Schlacke, Flugasche) durch eine unverändert hohe Qualität (Restkohlenstoff TOC < 1%) aus.

Die Erfindung umfasst auch ein Verfahren, wobei das Verhältnis von Halogenwasserstoff zu SO₂-Konzentration im Rauchgas nach der Abgasausbrandzone der Hauptfeuerung durch Einmischen des ausgebrannten weitgehend halogenwasserstofffreien aber SO₂-haltigen Abgasteilstroms eine verbesserte Sulfatierung von Flugaschen in der Hauptfeuerung bewirkt. Dadurch wird die Korrosionsneigung von abgelagerter Flugasche auf der Oberfläche des Hauptdampferzeugers vermindert und zugleich die Dioxinbildung im Hauptdampferzeuger inhibitiert. In der Brenngaskonditionierung der Nebenfeuerung werden vorzugsweise alle Bestandteile des Brenngases, die der vorgenannten Sulfatierung entgegenwirken, insbesondere aber Halogenwasserstoffe entfernt. Folglich zeichnet sich eine bevorzugte Ausführungsform des Verfahrens dadurch aus, dass bei der Brenngaskonditionierung eine vollständige oder überwiegende Abtrennung von Halogenwasserstoffen sichergestellt ist. Eine Abtrennung von Schwefelwasserstoff H₂S oder anderen gasförmigen schwefelhaltigen Stoffen erfolgt dabei vorzugsweise nicht. Bei der Verbrennung des Brenngases in der Nebenfeuerung wird H₂S zu SO₂ oxidiert und wird im Abgas der Hauptfeuerung zugeführt.

Das Verfahren und die Vorrichtung werden im Folgenden anhand von Ausführungsbeispielen mit Figuren näher erläutert. Es zeigen
**Fig.1** eine prinzipielle Darstellung einer Verbrennungsanlage für feste Brennstoffe mit einem zweistufigem Hauptverbrennungsprozess sowie einer separaten Nebenverbrennung,
**Fig.2** eine Darstellung der axialen Profile in einer Rostfeuerung der Verbrennungstemperaturen des Rostes T3 und des Rauchgases direkt oberhalb des festen Brennbettes T4, des Rauchgasheizwerts Hᵤ sowie der Sauerstoffgehalt O₂ des Rauchgases oberhalb des Brennbettes im Brennraum einer Rostfeuerung über der Verbrennungsrostlänge,
**Fig.3** eine Darstellung der axialen Konzentrationsverteilung in einer Rostfeuerung von Stickstoffmonoxid NO, Ammoniak NH₃ sowie Sauerstoffgehalt O₂ im Rauchgas oberhalb des Brennbettes im Brennraum über der Verbrennungsrostlänge,
**Fig.4** eine Darstellung der axialen Verteilung in einer Rostfeuerung der Salzsäurekonzentration sowie des Sauerstoffgehalt O₂ im Rauchgas oberhalb des Brennbettes im Brennraum über der Verbrennungsrostlänge,
**Fig.5a** **bis c** die Hauptbrennkammer einer Rostfeuerungsverbrennungsanlage mit drei beispielhaft möglichen Ausgestaltungen einer Abzweigung für einen Brenngasteilstrom,
**Fig.6a** **und b** eine prinzipielle Darstellung einer weiteren Ausführungsform einer Verbrennungsanlage für feste Brennstoffe mit einem zweistufigem Hauptverbrennungsprozess sowie einer separaten Nebenstromverbrennung sowie einem Wasser-Dampfkreislauf mit einstufiger Dampfturbine (**a**) sowie ein T-S-Diagramm für den Wasser-Dampfkreislauf (**b**),
**Fig.7a** **und b** eine prinzipielle Darstellung einer weiteren Ausführungsform einer Verbrennungsanlage für feste Brennstoffe mit einem zweistufigem Hauptverbrennungsprozess sowie einer separaten Nebenverbrennung sowie einem Wasser-Dampfkreislauf mit einstufiger Zwischenüberhitzung und mit zweistufiger Dampfturbine (**a**) sowie ein T-S-Diagramm für den Wasser-Dampfkreislauf (**b**),
**Fig.8** eine prinzipielle Darstellung einer Hauptbrennkammer mit Brenngasabzweigung in einer stationären Wirbelschichtfeuerung sowie
**Fig.9** eine prinzipielle Darstellung einer Hauptbrennkammer mit Brenngasabzweigung in einer zirkulierenden Wirbelschichtfeuerung.

### Ausführungsbeispiel 1:

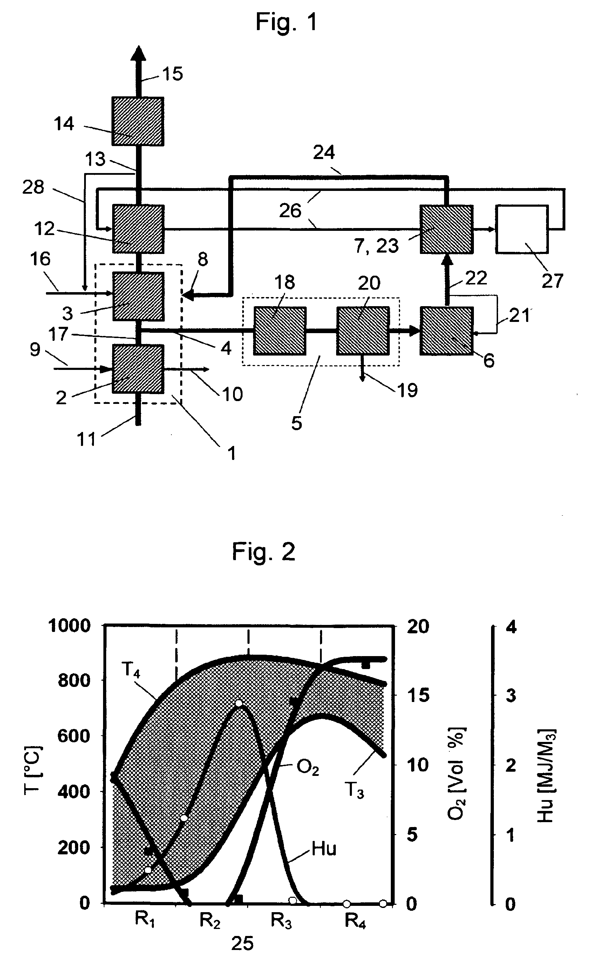

**Fig.1** zeigt schematisch eine Feststoffverbrennungsanlage mit Hauptfeuerung **1** für eine Feststoffverbrennung mit Hauptbrennkammer **2** (inkl. Festbrennstoffausbrandzone) und Hauptrauchgasnachbrennkammer **3** sowie einem zweiten Nebenverbrennungsstrang mit Abzweigung **4,** Brenngaskonditionierung **5,** einer Nebenbrenngasverbrennungskammer **6,** Mitteln zur energetischen Verwertung **7** sowie einer Ausmündung **8** zur Hauptfeuerung, vorzugsweise vor die Hauptrauchgasnachbrennkammer **3.** Grundsätzlich ist die Hauptfeuerung als Rost- oder Wirbelschichtfeuerung oder als Drehrohrfeuerung ausgestaltet.

Die Hauptbrennkammer **2** weist eine Festbrennstoffzufuhr **9,** eine Schlackeabführung **10** sowie Primärgaszufuhr **11** auf. Ein Festbrennstoff z.B. Müll und/oder Biomasse und/oder Kohle wird über eine Festbrennstoffzufuhr **9** der Hauptfeuerung zugeführt. In der ersten Stufe der Hauptfeuerung findet in der Hauptbrennkammer **2** ein Abbrand des Festbrennstoffes unter Zufuhr von sauerstoffhaltigem Primärgas z.B. Luft (Primärgaszufuhr **11**) statt. Bei (lokal) unterstöchiometrischer Sauerstoffzufuhr (Sauerstoffmangel) über das sauerstoffhaltige Primärgas werden heizwertreiche Rauchgase gebildet und als Brenngase aus dem Brennbett (Festbrennstoffausbrandzone) freigesetzt. Nachfolgend werden diese heizwertreichen Brenngase teilweise in die Hauptrauchgasnachbrennkammer **3** weitergeleitet und dort zusammen mit dem Abgas aus der Nebenfeuerung unter überstöchiometrischer Zufuhr von sauerstoffhaltigem Sekundärgas (Sauerstoffüberschuss) bei hohen Temperaturen ausgebrannt. Das dabei entstehende heiße Rauchgas wird einem Hauptdampferzeuger **12** (Hauptkessel) zugeführt. Im Hauptdampferzeuger wird die thermische Energie des heißen Rauchgases zur Dampferzeugung genutzt wobei das Rauchgas abkühlt. Abhängig vom eingesetzten Brennstofftyp (Zusammensetzung, Homogenität, Feuchtigkeitsgehalt N, Cl, S etc.) werden bei der Verbrennung verschiedene Schadstoffe gebildet und/oder aus dem Brennbett freigesetzt. Um den gesetzlichen Anforderungen an die Emission von Verbrennungsanlagen zu genügen wird das abgekühlte Rauchgas (vorzugsweise auf T < 200°C) nach dem Kessel als Rohgas **13** den Hauptrauchgasreinigungsstufen **14** zugeführt. Es verlässt diese dann abgereinigt als Reingas **15.** Die nach Kessel angeordnete Abgasreinigung besteht aus einer oder mehreren Stufen zur Staubund/oder HCl- und/oder HF- und/oder SO₂- und/oder Hg- und/oder NOₓ und/oder PCDD/F -Abscheidung. Bei schadstoffarmer Verbrennungsführung kann auf NOₓ und/oder PCDD/F Abscheideverfahren verzichtet werden.

Der Hauptdampferzeuger **12** besteht im Rahmen des Ausführungsbeispiels vorzugsweise aus den Stufen Eco, Verdampfer und Überhitzer, die alle gemeinsam durch den Rauchgasstrom aus der Nachbrennkammer **3** aufgeheizt werden. Dabei wird Wasserdampf vorzugsweise im überhitzten Zustand im Rahmen der energetischen Nutzung des Rauchgases aus der Hauptnachbrennkammer vorzugsweise mit Temperaturen von maximal 400°C erzeugt. Höhere Dampftemperaturen führen insbesondere bei chloridhaltigen Ascheablagerungen zu einer starken Korrosion des Kesselwerkstoffs (chlorinduzierte Kesselkorrosion) und verursacht dadurch erhebliche Kosten (Reparatur, Betriebsausfall).

Ein wesentliches Merkmal der Vorrichtung umfasst den vorgenannten zweiten Nebenverbrennungsstrang, über den ein Teil des heizwertreichen Brenngases vor Eintritt in die Hauptnachbrennkammer abgezweigt wird. Dieser Teil des Brenngasstroms wird aus dem Brenngasstrom aus der Hauptfeuerung entnommen, vorzugsweise im Bereich zwischen Festbrennbettoberfläche in der Hauptbrennkammer **2** und vor der sauerstoffhaltigen Sekundärgaszufuhr **16** in der Hauptrauchgasnachbrennkammer **3.** Aufgrund der unterstöchiometrischen Feststoffverbrennung ist das aus der Hauptbrennkammer **2** abgezweigte heizwertreiche Brenngas sauerstofffrei oder nahezu sauerstofffrei. Es besteht im Wesentlichen aus den gasförmigen Hauptbestandteilen N₂, H₂O, CO₂, CO, CₙHₘ, H₂, enthält aber auch feste Verbrennungsprodukte wie Flugasche, Rußpartikel sowie flüchtige Alkali- und (Schwer-) Metallverbindungen (meist Chloride) und Hg, HCl, HF, H₂S, NH₃ und geringe Mengen an NO.

Der aus dem Brenngasstrom **17** abgezweigte Teil des heizwertreichen Brenngases wird zunächst der Brenngaskonditionierung **5** zugeführt. Bei dieser wird der Brenngasteilstrom zunächst einem Wärmetauscher **18** (oder Quench) auf Temperaturen von bevorzugt zwischen 350 und 450°C abgekühlt. Dabei resublimieren oder kondensieren nahezu alle flüchtigen Alkali- und Metallverbindungen auf der Oberfläche der Flugasche mit Ausnahme von Quecksilber. Die Flugaschepartikel und Rußpartikel können nun gemeinsam mit sonstigen festen Stoffen als Feststoffaustrag **19** aus dem Brenngas vorzugsweise mittels Filtration **20** abgeschieden und entweder einer Verbrennung, z.B. der Hauptbrennkammer **2** erneut zugeführt, anderweitig behandelt, verwertet oder deponiert werden.

Durch eine Zudosierung von einem alkali- oder erdalkalihaltigen Neutralisationsmittel wie z.B. Kalziumoxid CaO und/oder Kalziumcarbonat CaCO₃ und/oder Kalziumhydroxid Ca(OH)₂ vorzugsweise in den Brenngasstrom nach Temperierung vor der Filtration **20** lassen sich auch korrosive saure Gase z.B. Salzsäure HCl oder Flusssäure HF absorbieren und gemeinsam mit den vorgenannten festen Stoffen im Schwebstofffilter abscheiden. Die bei der Brenngasfiltrierung anfallenden Feststoffe bestehen im Wesentlichen aus einer sehr kohlenstoffreichen Flugasche (Russpartikel, kontaminiert mit polyaromatischen Kohlenwasserstoffen (PAK)) und aus dem Reaktionsprodukt (CaCl₂, CaF₂). Diese Reststoffe werden abgeführt und einer Weiterbehandlung vorzugsweise einer Verbrennung oder Deponierung zugeführt. Dagegen werden Hg und NH₃ im Rahmen dieser Filtration praktisch nicht abgeschieden.

Alternativ ist auch ein nach der Filtration separat angeordneter Festbettabsorber (z.B. Partikelschüttung von Absorptionsmaterial) zur Absorption von sauren Gasen (insbesondere HCl) denkbar.

Die abgeschiedenen kohlenstoffreichen Flugaschen/Feststoffe enthalten sehr hohe Konzentrationen an toxischen polyaromatischen Kohlenwasserstoffen (PAK) wie insbesondere Naphtalin, Phenanthren, Anthracen, Fluoranthen, Pyren, Chrysen und weitere toxische Verbindungen. Bei einer möglichen Verbrennung in der Hauptverbrennung oder separat außerhalb der in **Fig.1** dargestellten Anlage dieser Aschen werden die Kohlenstoffpartikel und die PAK zu CO₂ und H₂O oxidiert. Bei den üblichen hohen Verbrennungstemperaturen über 800°C ist mit einer Verdampfung oder thermischer Zersetzung von chloridhaltigen anorganischen Verbindungen und damit mit einer Freisetzung von Salzsäure HCl zu rechnen (z.B. CaCl₂ setzt Salzsäure HCl frei):

CaCl₂ + 2 H₂O → 2 HCl + CaO + 1/2 O₂

Das bei der separaten Ascheverbrennung gebildete chlorid- und / oder HCl-haltige Abgas wird dann vorzugsweise dem abgekühlten Rohgas **13** nach dem Hauptdampferzeuger **12** und vor den Hauptrauchgasreinigungsstufen **14** zugeführt und in der Hauptrauchgasreinigung der Hauptverbrennung, d.h. in den (Hauptrauchgasreinigungsstufen **14** gereinigt. Der verbleibende ausgebrannte kohlenstoffarme feste Ascherückstand kann zusammen mit der abgeschiedenen Flugasche aus der Hauptrauchgasreinigung deponiert oder verwertet werden.

Der konditionierte (gereinigte) heizwertreiche Brenngasteilstrom wird in der Brenngasnebenverbrennungskammer **6** unter Zufuhr von einem sauerstoffhaltigen Gas (Sekundärgas z.B. mit einem luftgestuften Low-NOₓ-Gasbrenner) vorzugsweise unter Sauerstoffüberschuss ausgebrannt. Die hierzu benötigte Verbrennungsluft und/oder das sauerstoffhaltige Sekundärgas werden vorzugsweise im Wärmetauscher **18** vorgewärmt. Außerdem weist die dargestellte Ausführungsform eine Abgasrezirkulation **21** von Rauchgasanteilen aus dem Rauchgasstrom **22** zurück in die Brenngasnebenverbrennungskammer **6** zur Temperaturkontrolle während des Brenngasausbrandprozesses der Nebenverbrennung (in der Brenngasnebenverbrennungskammer **6** auf.

Alternativ oder in Kombination kann die Abgasrezirkulation auch aus dem Rauchgasstrom **24** erfolgen. Dadurch lässt sich bei sehr geringen Luftzahlen eine niedrige NOₓ-Bildungsrate bei der Nebenverbrennung des NH₃-haltigen Brenngases realisieren.

Der im Brenngasteilstrom enthaltene Schwefelwasserstoff (H₂S) wird bei der Brenngaskonditionierung im Vergleich zu HCl schlechter abgeschieden. HCl wird somit bevorzugt abgeschieden. Nicht abgeschiedenes H₂S wird bei Nebenverbrennung zu SO₂ umgesetzt:

2 H₂S + 3 O₂ → 2 SO₂ + 2 H₂O

Der heiße Rauchgasstom **22** (Abgas) wird aus der Brenngasnebenverbrennungskammer **6** einem nachfolgenden Nebendampfüberhitzer **23** zugeführt und dient zur Endüberhitzung des Dampfes aus dem Hauptdampferzeuger **12** von der Hauptfeuerung **1.** Aufgrund der geringen Korrosivität des heißen Rauchgasstoms **22** ist eine Dampfüberhitzung auf kraftwerkstypische Temperaturen von T₂ > 500° ohne eine Gefahr von vorzeitigen Korrosionsschäden in dem für die energetische Nutzung **7** vorgesehenen Nebendampfüberhitzer **23** durchführbar. Die Erzeugung von elektrischer Energie mittels Dampfkraftprozess erfolgt dadurch in besonders vorteilhafter Weise mit sehr hohem kraftwerkstypischem Wirkungsgrad in einer Dampfturbine **27**. Der Nebendampfüberhitzer **23** ist grundsätzlich in die Nebenbrennkammer **6** integrierbar.

Das aus dem Nebendampfüberhitzer **23** austretende abgekühlte Abgas **24** weist eine Temperatur höher als die Temperatur des aus dem Hauptdampferzeuger austretenden Dampfes und vorzugsweise eine Temperatur oberhalb der Temperatur des gereinigten Brenngases nach Abscheiderstufe **20** auf (über 400°C, weiter bevorzugt über 450°C). Über die Ausmündung **8** wird das Abgas **24** in die Hauptfeuerung **1** vorzugsweise vor der Hauptnachbrennkammer **3** zugeführt. In diesem Abgas **24** ist zwar SO₂, aber praktisch keine Salzsäure HCl vorhanden, womit sich in vorteilhafter Weise das HCl/SO₂-Verhältnis im Rauchgas der Hauptfeuerung bei einer Einmischung des Abgases reduziert und eine Sulfatierung der Flugasche im Rauchgas nach der Hauptabgasausbrandzone der Hauptfeuerung unterstützt wird. Damit verringern sich in vorteilhafter Weise signifikant die Neigung zur chlorinduzierten Kesselkorrosion und die Dioxinbildung im Bereich des Hauptdampferzeugers **12** (Kessel der Hauptverbrennung). Die vorgenannte Entfernung (Abscheidung) von kohlenstoffhaltigen Feststoffpartikeln (z.B. Russpartikel) im Rahmen der Brenngaskonditionierung **5** des Teilbrenngasstromes unterstützt zusätzlich die Minderung der Dioxinbildung(de-novo Synthese) über die Minderung des partikulären Kohlenstoffgehaltes (Rußpartikel) in den A-scheablagerungen im Hauptdampferzeuger **12** der Hauptfeuerung.

Das zur Hauptfeuerung **1** rückgeführte Abgas **24** kann Stickoxide NOₓ enthalten. Durch Zuführung des Abgases **24** vor der Hauptnachbrennkammer **3** (vor Sekundärgaszufuhr **16**) werden bei reduzierender Atmosphäre vorhandene NOₓ weitgehend zu Stickstoff N₂ reduziert. z.B.

2NO + 2CO → N₂ + 2CO₂

Die Minderung der NOₓ in der Hauptfeuerung einer Rostfeuerung ist besonders effizient wenn die Rückführung **24** in Form eines oder mehrerer Freistrahlen in die Hauptbrennkammer **2,** zur axialen Durchmischung des Brennraums über die Brennbettbereiche erfolgt. Eine Zumischung von Wasser (Gas-Wasser Freistrahl) zur Absenkung des Brenngasheizwertes in der Hauptfeuerung **1** wie in DE 10 2006 005 464 B3 beschrieben, ist nicht erforderlich, da bei der Vermischung von nicht abgeführtem Brenngas **17** mit dem ausgebrannten und wärmegenutzten Abgas **24** resultierende Heizwert des vermischen Rauchgases vor der Hauptnachbrennzone **3** vermindert wird. Damit werden Temperaturspitzen und damit eine NOₓ-Bildung beim Abgasausbrand in der Hauptabgasausbrandzone vermindert bzw. vermieden.

Idealer Weise vermindert sich die NOₓ Bildung beim finalen Rauchgasausbrand in der Hauptabgasausbrandzone **3** vorzugsweise im Temperaturfenster zwischen 900 und 1000°C infolge eines autogenen SNCR Prozesses

4NO + 4NH₃ + O₂ → 4N₂ + 6H₂O

Dadurch ist die NOₓ-Bildung in der Hauptfeuerung sehr niedrig, womit auf weitere Sekundärmaßnahmen (wie SCR und/oder SNCR) zur NOₓ Reduktion verzichtet werden kann.

Ferner ist insbesondere beim Einsatz von Festbrennstoffen (**9**) mit sehr niedrigem Stickstoffgehalt (z.B. naturbelassenes Holz) auch eine Verwendung des zurückgeführten sauerstoffhaltigen Abgases **24** zur Eindüsung in die Hauptrauchgasnachbrennkammer **3** als vollständiger oder teilweiser Ersatz von Sekundärgas möglich. Durch eine weitere Rauchgasrezirkulation **28** zur Hauptrauchgasnachbrennkammer **3** wird zusätzlich die Sekundärgaszufuhr vermindert und führt zu niedrigen O₂ gehalten im Abgas **13.** Dadurch kann die Abgasmenge **13** vermindert und die Abgasverluste reduziert und so eine Steigerung des Kesselwirkungsgrades erreicht werden.

Eine Rückführung des Abgases **24** in die Hauptfeuerung **1** ermöglicht ferner eine Abreinigung der in diesem verbliebenen und bei der Brenngaskonditionierung nicht abgeschiedenen Schadstoffbestandteile, insbesondere von Quecksilber, gemeinsam mit dem Rohgas **13** in den vorhandenen Hauptrauchgasreinigungsstufen **14** der Hauptfeuerung. Zusätzliche Reinigungsstufen sind hierfür nicht erforderlich.

**Fig.1** umfasst zur energetischen Nutzung einen Wasser-Dampf-Kreislauf **26** mit dem dargestellten Hauptdampferzeuger **13** und Nebendampfüberhitzer **23** sowie eine durch diese betriebene Dampfturbine **27** als Antrieb z.B. eines nicht weiter dargestellten Generators.

### Ausführungsbeispiel 2:

Es erfolgt eine Müllverbrennung als Rostfeuerung auf einem Verbrennungsrost mit mehreren Rostbereichen über eine Verbrennungsrostlänge als Festbrennbettausbrandzone. Als Brennstoff dient z.B. ein sehr heizwertarmer Hausmüll (Hᵤ = 7.4 MJ/kg). Die Primärluftstöchiometrie beträgt λₚ = 0,75. Eine Brennstoffanalyse (Bezugsgröße: Gesamtmasse an feuchtem Müll) ist in Tab.1 angegeben.

**Tab.1: Brennstoffzusammensetzung (Anteile bezogen auf die Gesamtmasse)**

| Bestandteil | Anteil |
|---|---|
| H₂O | 34.2 % |
| Flüchtige | 36.5 % |
| Fixer Kohlenstoff | 4.6 % |
| Asche | 24.7 % |
| C | 19.8 % |
| H | 3.0 % |
| O | 13.0 % |
| N | 0.78 % |
| Cl | 0.39 % |
| S | 0.26 % |

Im Rahmen dieses Ausführungsbeispiels wird der abzuzweigende Teil des heizwertreichen Brenngases (Brenngasteilstrom) aus dem Brennraum oberhalb des Verbrennungsrostes, d.h. im Bereich der Hauptverbrennungszone (O₂-Minimum)des Festbrennbettes entnommen.

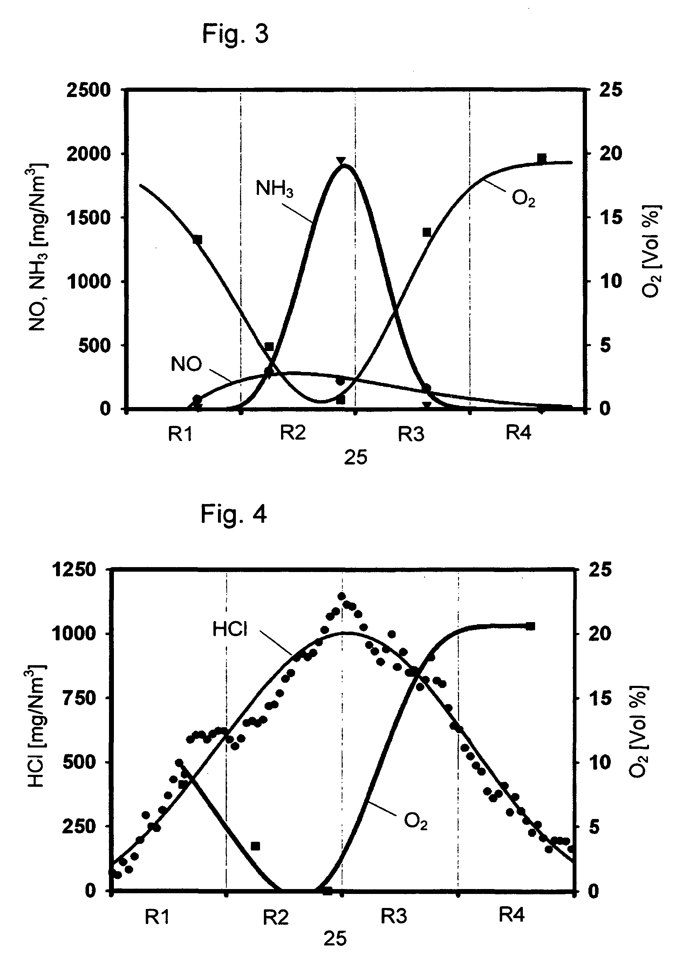

**Fig.2** zeigt gemessene axialen Profile der Temperaturen des Verbrennungsrostes **T3** und des Brenngases **T4** oberhalb des festen Brennbettes(jeweils in °C), des Rauchgasheizwerts Hᵤ (in MJ/m³ feucht) im Brennraum sowie der Sauerstoffkonzentration O₂ (in Vol.%) im Brennraum oberhalb der Brennbettoberfläche, **Fig.3** die Konzentrationen von Stickstoffmonoxid NO, Ammoniak NH₃ (jeweils in mg/Nm³, Nm³ = Normkubikmeter) sowie Sauerstoffgehalt O₂ (in Vol.%) sowie **Fig.4** die Salzsäurekonzentration (in mg/Nm³) sowie des Sauerstoffgehalt O₂ (in Vol.%) im Brennraum über der Verbrennungsrostlänge **25,** dargestellt mit den Verbrennungsrostbereichen **R1** bis **R4.** Dabei durchläuft der Brennstoff von der Festbrennstoffzufuhr bis zur Schlackeabführung die gesamte Verbrennungsrostlänge, in den Diagrammen gem. **Fig.2 bis 4** links beginnend von **R1** bis **R4.**

Der Maximalwert und die Breite der axialen Verteilung (axialer Teilbereich des Rostes) des Heizwertes **Hᵤ** des Brenngases im Brennraum steigen generell mit zunehmendem Heizwert **Hᵤ** und insbesondere mit zunehmendem Flüchtigengehalt und abnehmender Feuchte des festen Brennstoffs an. Durch Verminderung der Primärluft und/oder Sauerstoffanreicherung der Primärluft und/oder eine Primärluftvorwärmung, insbesondere lokal im Bereich der Hauptbrennzone (O₂-Minimum), kann die Menge und der Heizwert des für die Nebenfeuerung nutzbaren Brenngases gesteigert werden. Im **Fig.2** liegt der optimale Ort der Brenngasabzweigung im Rostbereich **R2/R3.** Die Brenngastemperatur **T3** steigt hier auf ein Maximum. Der anschließende Sauerstoffanstieg im weiteren Verlauf im Rostbereich **R3** verbunden mit einem Temperaturabfall charakterisiert den weitgehenden Ausbrand des Festbrennbettes (vgl. **Fig.2**).

Folglich erfolgt eine Abzweigung von Brenngas bevorzugt im Brennraum im Rostbereich **R2/R3.**

Eine Beeinflussung und Regelung der Lage und Ausdehnung der Feststoffverbrennung auf dem Verbrennungsrost in der Hauptbrennkammer erfolgt bevorzugt anhand eine Verbrennungscharakterisierung mittels optischer Feuerungsüberwachungssysteme wie beispielsweise durch Infrarotkameras und/oder Videokameras sowie eine darauf basierende Ansteuerung der Primärgaszufuhr (Menge und Verteilung in die einzelnen Rostzonen) und/oder der Rostkinematik (Vorschubgeschwindigkeit und Verweilzeiten von Brenngut auf den Rostzonen des Feuerungsrostes) und/oder Brennstoffzufuhrmenge und/oder Primärluftvorwärmung und/oder evtl. durch O₂ Anreicherung des Primärgases.

Eine Abzweigung von Brenngas für den Teilstrom aus der Hauptbrennkammer erfolgt bevorzugt in Abhängigkeit der benötigten Brenngaswärmeleistung bei der separaten Nebenverbrennung, d.h. des Brennwertes Hu multipliziert mit dem Volumenstrom des abgezweigten Brenngasteilstroms. Für eine entsprechende Steuerung erfolgt zunächst eine Ermittlung des Heizwertes Hu im Brenngas im Entnahmebereich oder vorzugsweise in der Entnahmeleitung **4** mit einem online Gaskalorimeter als Regelgröße für den abgezweigten Brenngasmengestrom mit benötigter Brenngaswärmeleistung der Nebenbrennkammer.

Das Maximum der Ammoniakkonzentrationsverteilung NH₃ im Brennraum (vgl. **Fig.3**) liegt im Bereich des O₂ Minimums. Der abgezweigte Teil des heizwertreichen Brenngases enthält somit große Mengen an Ammoniak. Der Ausbrand des NH₃-haltigen Brenngases in der Nebenbrennkammer kann in vorteilhafter Weise mit einem kommerziell verfügbaren luftgestuften Gasbrenners (LowNOx Stufenbrenner) erfolgen und ermöglicht dadurch bereits eine geringe NOₓ-Bildung.

Allerdings enthält das Brenngas insbesondere im Bereich der Abzweigung (**R2/R3**) (O₂-Minimum) auch erhebliche Mengen an Salzsäure HCl (vgl. **Fig.4**). HCl führt zur Bildung von Alkali- und Metallchloriden im Rauchgas die sich auf der Kesseloberfläche ablagern können. Insbesondere diese chloridhaltigen Kesselascheablagerungen sind sehr korrosionsfördernd. Daher muss das bei der Verbrennung von chlorhaltigen Brennstoffen gebildete HCl bei der Brenngaskonditionierung der Nebenbrennkammer wie vorgenannt abgeschieden werden.

Schwefelverbindungen werden im Bereich des O₂-Minimums nahezu vollständig ins Abgas als H₂S freigesetzt. Bei der Verbrennung wird SO₂ gebildet.

2H₂S + 3O₂ → 2H₂O + 2SO₂

SO₂ verursacht unter den Bedingungen der Nebenfeuerung/-Kessel sehr geringe Korrosionsprobleme.

Durch die im Verhältnis zu H₂S bevorzugte und damit effizientere oder vollständigere Abscheidung von HCl bei der Brenngaskonditionierung vor der Nebenverbrennung wird auch das Verhältnis von HCl/SO₂ bei einer anschließende Rückführung des ausgebrannten Brenngases zur Hauptfeuerung reduziert und damit auch die Korrosion und PCDD/F-Bildung im Hauptdampferzeuger der Hauptfeuerung und damit des Gesamtprozesses in vorteilhafter Weise vermindert.

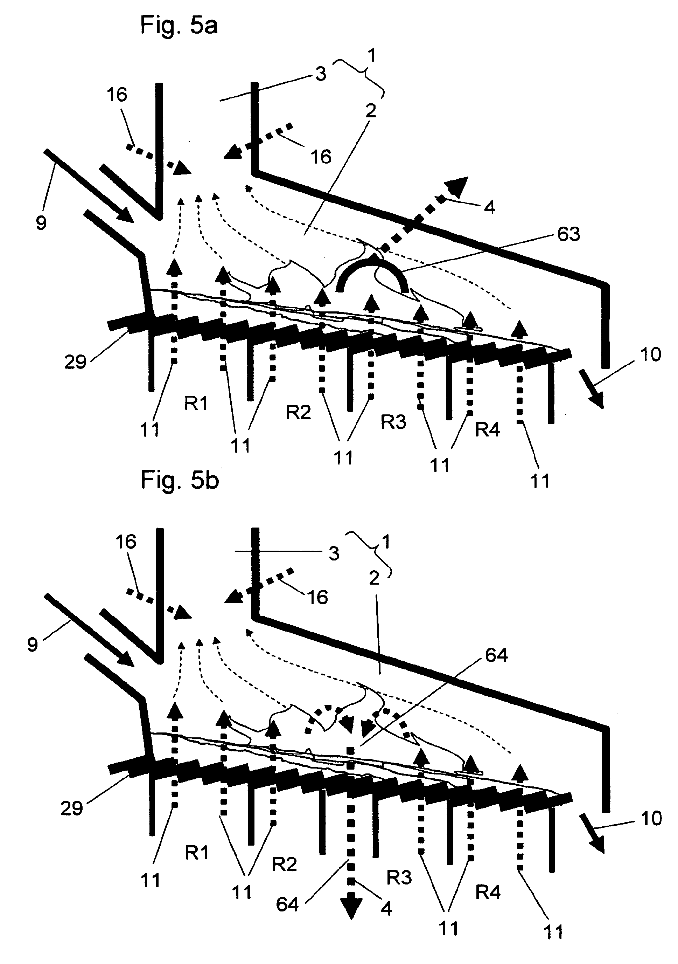

**Fig.5a** **bis c** zeigen beispielhaft technische Umsetzungen einer Abzweigung **4** des Brenngasteilstroms jeweils im Brennraum **2** einer Hauptfeuerung **1** oberhalb des Feuerungsrostes **29** unter Berücksichtigung der vorgenannten Vorüberlegungen. Der Feuerungsrost **29** umfasst vier Rostzonen **R1** bis **R4** zwischen der Festbrennstoffzufuhr **9** und Schlackeabführung **10** und wird von unten von Primärgaszuführungen **11** durchströmt. Die Abzweigung des Brenngasteilstroms erfolgt im Bereich der Rostzonen **R2** und **R3.**

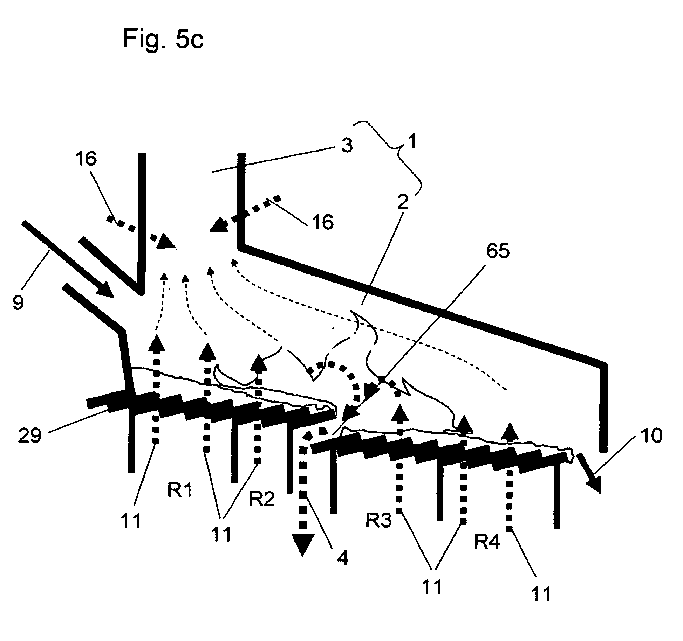

Im Rahmen von **Fig.5a** erfolgt eine Absaugung eines Brenngasteilstroms mittels einer nach unten hin offenen Saugglocke **63** als Teil der Abzweigung **4.** **Fig.5b** **und c** zeigen beispielhaft ein Absaugungsrohr **64** für die Abzweigung **4** des Brenngasteilstroms nach unten durch den Feuerungsrost **29** und der darauf transportierten Festbrenngutschüttung hindurch. Diese Ausführungen eignen sich insbesondere bei der Verbrennung von Hausmüll oder anderen lockeren, porösen oder sonst wie wenig kompakt auf dem Feuerungsrost aufliegenden heizwertarmen Einsatzstoffen. **Fig.5c** zeigt eine zwischen den Rostbereichen **R2** und **R3** unterbrochenen Stufenrost als Feuerungsrost, der eine Lücke **65** bildet und damit den Strömungswiderstand der Absaugung verringert und jene dadurch zusätzlich erleichtert.

### Ausführungsbeispiel 3:

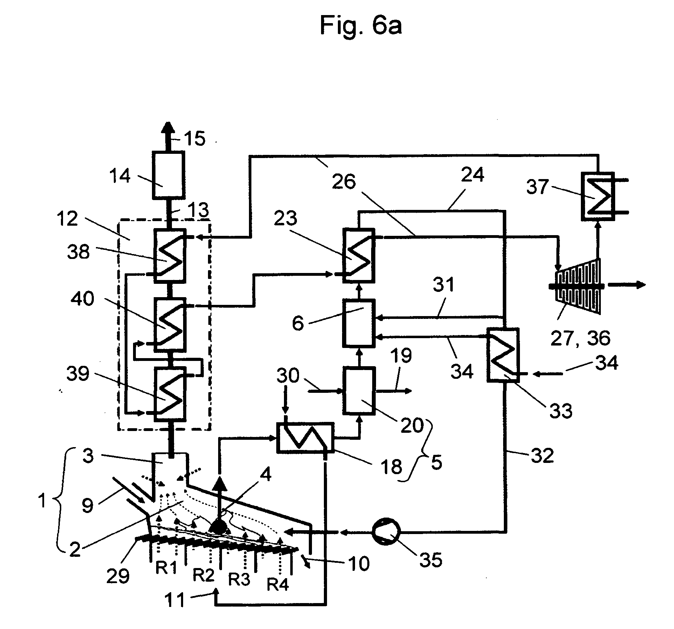

**Fig.6a** zeigt eine spezielle Ausführungsform entsprechend des ersten allgemein beschriebenen Ausführungsbeispiels (vgl. **Fig.1**) mit einer einstufigen Expansionsturbine **36.** Sie weist wie diese eine Hauptfeuerung **1** mit Hauptbrennkammer **2,** Hauptrauchgasnachbrennkammer **3,** Festbrennstoffzufuhr **9,** Schlackeabführung **10** und Primärgaszufuhr **11,** sowie einen Hauptdampferzeuger **12** sowie Hauptrauchgasreinigungsstufen **14** für das Rohgas **13** auf. Ebenso ist in der Ausführungsform eine separate Nebenverbrennung für einen Teil der Brenngase in einem zweiten Nebenverbrennungsstrang vorgesehen. Der Nebenverbrennungsstrang umfasst eine Abzweigung **4** für den genannten Teil der Brenngase im Bereich des Brennraums **2** oberhalb der Festbettausbrandzone auf dem Feuerungsrost **29,** vorzugsweise über dem Verbrennungsrostbereich **R2/R3.** Weiter bevorzugt ist eine Absaugung in dem Bereich des Brennraums angeordnet, in dem der Brenngasheizwert Hu sein Maximum aufweist (vgl. Ausführungsbeispiel 2, **Fig.2**).

Von der Abzweigung **4** wird der Brenngasteilstrom in einen mit Primärluft als Kühlmedium betriebenen Wärmetauscher **18** geleitet. Die hierbei vorgewärmte Primärluft wird von unten durch den Feuerungsrost **29** in den Hauptbrennraum geleitet.

Die weitere Brenngaskonditionierung umfasst wie das erste Ausführungsbeispiel mindestens einen Schwebstofffilter **20** mit Feststoffaustrag **19** sowie optional eine Neutralisationsmitteleinleitung **30** zur Abscheidung von Säuren.

Es folgt eine Weiterleitung der konditionierten Brenngase in die Brenngasnebenverbrennungskammer **6** zur Nachverbrennung sowie eine Weiterleitung des heißen Abgasstroms zu einem Nebendampfüberhitzer **23** eines Wasser-Dampf-Kreislaufes **26.**

Das den Nebendampfüberhitzer **23** abgekühlt verlassende Abgas **24** wird im Rahmen dieses Ausführungsbeispiels in einen Sekundärteilgasstrom **31** für den Betrieb und Temperaturkontrolle der Brenngasnebenverbrennungskammer **6** und einen in den Brennraum **2** rezyklierten zweiten Teilgasstrom **32** aufgeteilt. Optional wird das Abgas **24** zusätzlich oder alternativ zum ersten Sekundärteilgasstrom **31** durch einen Abgaswärmetauscher **33** zur Vorwärmung eines Sekundärgasstroms **34** geleitet. Die Rezyklierung des zweiten Teilgasstroms **32** erfolgt durch Eindüsung in die Hauptbrennkammer **2** mit Hilfe eines Gebläses **35,** was eine axiale Durchmischung des Brennraums über die Brennbettbereiche hinweg und damit vorteilhaft eine gleichmäßigere Verbrennung im Brennraum **2** bewirkt.

Der Wasser-Dampf-Kreislauf **26** verlässt die vorgenannte einstufige Expansionsturbine **36** zu einem Kondensator **37,** in dem der expandierte Nassdampf aus zunächst verflüssigt wird und von dort über eine Kesselspeisepumpe (nicht dargestellt) zurück zum Hauptdampferzeuger **12** mit Vorwärmer **38,** Verdampfer **39** und Vorüberhitzer **40** geleitet wird. Der vorüberhitzte Dampf wird anschließend durch den Überhitzer **23** der Nebenfeuerung und vorn dort wieder in die Expansionsturbine **36** geleitet.

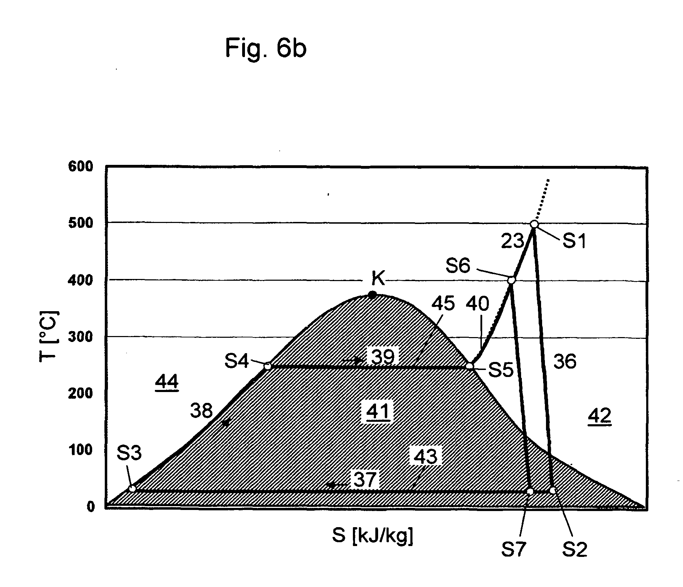

Die Temperaturen T in °C sowie der Aggregatzustand des Wassers oder Dampfes an den vorgenannten Stationen des Wasser-Dampf-Kreislauf lassen sich über die Entropie s in kJ/kg in einem T/s-Diagramm nachverfolgen (Kreisprozess, **Fig.6b**). Mit K ist der sog. kritische Punkt des Wassers dargestellt, darunter grau hinterlegt der Nassdampfbereich **41.** Die jeweiligen Stationen gem. **Fig.6a** sind in **Fig.6b** durch ihre Dampfparameter wiedergegeben. Ausgehend von der im Punkt **S1** beginnende Expansion in der Expansionsturbine **36** vom Heißdampfbereich **42** in den Nassbereich **41** zum Punkt **S2. Danach** erfolgt auf einer ersten Isobaren **43** (gleich Isotherme im Nassdampfbereich) ein Durchlauf durch den Kondensator **37** bis an den Flüssigkeitsbereich **44** (Punkt **S3**). Hier erfolgt nach einer Druckerhöhung mit einer Kesselspeisepumpe (nicht dargestellt) ein isobarer Durchlauf durch den Vorwärmer **38** bis zum Erreichen der Siedetemperatur im Punkt **S4,** sowie anschließend auf dieser zweiten Isobaren ein isothermer Durchlauf **45** durch das Nassdampfgebiet im Verdampfer **39** zum Punkt **S5** mit anschließender Überhitzung im Vorüberhitzer der Hauptfeuerung **40** bis zum Punkt **S6** und im Nebendampfüberhitzer **23** der Nebenfeuerung weiter bis zum Punkt **S1.**

Es ist allgemein bekannt und bedarf keiner weiteren Erklärung, dass eine zusätzliche Dampfüberhitzung vom Punkt **S6** zum Punkt **S1** sowie eine Expansion zum Punkt **S2** (anstelle von Punkt **S6** zu Punkt **S7**) die nutzbare Enthalpiedifferenz und somit den Wirkungsgrad des Kreisprozesses signifikant erhöht. Der Wirkungsgrad η einer elektrischen Bruttostromerzeugung einer heutigen modernen Müllverbrennungsanlage (Rostfeuerung) mit einem Dampfzustand von 40bar und einer Eintrittstemperatur von 400°C in die Expansionsturbine (Punkt **S6**) beträgt (bei einem Kesselwirkungsgrad von z.B. 82%) etwa η = 24%. Eine weitere Überhitzung auf über 400°C z.B. auf 500°C ist durch vorgenannte Maßnahmen (energetische Nutzung eines konditionierten Brenngasteilstroms durch separate Nebenverbrennung mit signifikant reduzierter Neigung zur Korrosion) in vorteilhafter Weise auch im Dauerbetrieb möglich. Dieser Wirkungsgrad lässt sich allein mit der im Rahmen des Ausführungsbeispiels vorgeschlagenen Überhitzung auf 500°C (Punkt **S1**) auf 26,2% erhöhen. Bei einer Dampfüberhitzung auf 550°C beträgt der Wirkungsgrad 27%

### Ausführungsbeispiel 4:

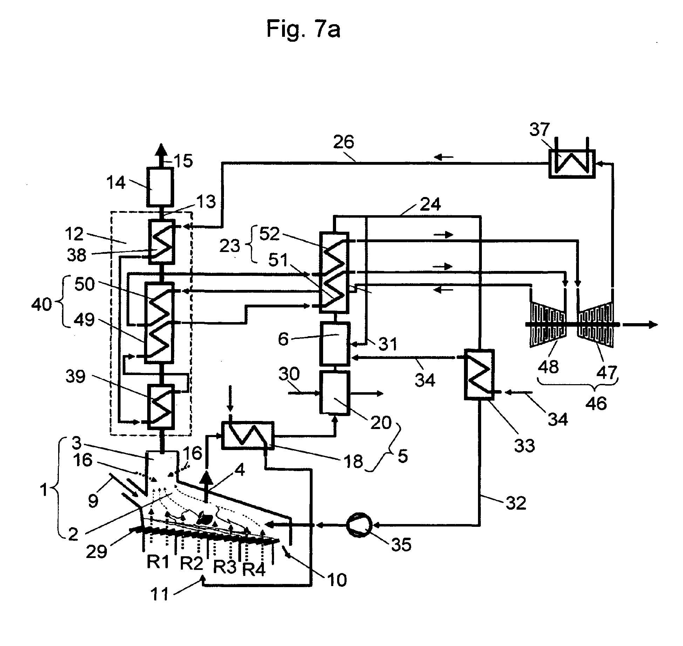

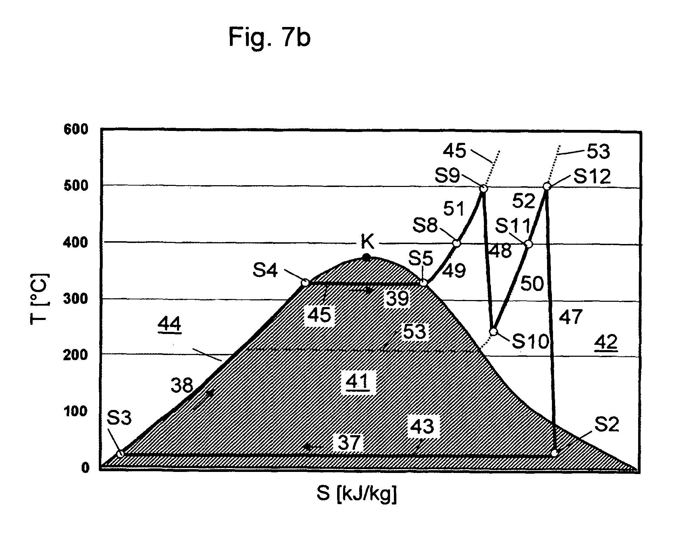

**Fig.7a** zeigt eine weitere spezielle Ausführungsform entsprechend des ersten allgemein beschriebenen Ausführungsbeispiels (vgl. **Fig.1**) mit einer zweistufigen Expansionsverbundturbine **46** mit Niederdruckturbine **47** und Hochdruckturbine **48** und dazwischen liegender Zwischenüberhitzung. Auf den grundsätzlichen Aufbau gem. **Fig.7a** sowie den in einem T-s-Diagramm gem. **Fig.7b** beschriebenen Wasser-Dampf- Kreislauf (Kreisprozess) wird auf die Gemeinsamkeiten zu Ausführungsbeispiel 3 (**Fig.6a** **und b**) verwiesen.

Wie im vorangegangenen Ausführungsbeispiel 3 erfolgt eine getrennte energetische Nutzung des abgezweigten Brenngasteilstroms in einem Nebendampfüberhitzer **23** sowie des nicht abgezweigten Brenngashauptstrom (zusammen mit dem rückgeführten Abgasteilstrom **24,32** aus der Nebenfeuerung) in einem Hauptdampferzeuger **12.** Das vorliegende Ausführungsbeispiel unterscheidet sich darin, dass der Nebendampfüberhitzer **23** sowie der Vorüberhitzer **40** jeweils zweistufig mit jeweils einem Niederdruck- und einem Hochdruckteil gestaltet ist. Folglich verlässt der Wasser-Dampf-Kreislauf **26** die Niederdruckturbine **47** im Punkt **S2** (**Fig.7b**) zu einem Kondensator **37,** in dem der expandierte Nassdampf zunächst auf der ersten Isobaren **43** isobar und isotherm verflüssigt wird (**Fig.7b****, S3**) und von dort über eine Kesselspeisepumpe zurück zum Hauptdampferzeuger **12** mit Vorwärmer **38,** Verdampfer **39** und Hochdruck-Vorüberhitzer **49** des Vorüberhitzers **40** geleitet (vgl. **Fig.7b****,** isobar auf der zweiten Isobaren **45** (z.B. 150 bar über die Punkte **S4** und **S5** verdampft und zu **S8** überhitzt wird. Der auf ca. 400°C (350 bis 420°C) vorüberhitzte Dampf wird anschließend auf gleicher Isobare durch den Hochdruck-Dampfüberhitzer **51** des Nebendampfüberhitzers **23** und vorn dort mit ca. 500°C weiter in die Hochdruckturbine **48** (Punkt **S9**) geleitet. In dieser erfolgt eine erste Entspannung im Heißdampfgebiet bis zu einem Zwischendruck (Punkt **S10**). Von diesem ausgehend erfolgt auf einer dritten Isobaren **53** (Druck z.B. p = 20 bar, zwischen Drücken der ersten und zweiten Isobaren) eine zweite Niederdrucküberhitzung zunächst im Niederdruck-Vorüberhitzer **50** auf ca. 400°C zum Punkt **S11** und anschließend im Niederdruck-Dampfüberhitzer **52** des Nebendampfüberhitzers **23** auf eine Temperatur von ca. 500°C mit anschließender Weiterleitung zur Niederdruckturbine **47** (vgl. Punkt **S12**) mit nachfolgender Expansion in der Niederdruckturbine zu Punkt **S2.**

Der Wirkungsgrad η einer elektrischen Bruttostromerzeugung ist durch einen Betrieb mit Verbundturbine mit Zwischenüberhitzung in vorgenannter Weise von vorgenannten ca. n=24% auf ca. 30% erhöht.

Durch Absenkung des Sauerstoffgehaltes im Rauchgas der Hauptfeuerung durch eine zusätzliche Rauchgasrezirkulation in die Hauptrauchgasnachbrennkammer **3,** d.h. einer Minderung der Abgasverluste durch Reduzierung des Luftüberschusses ist im Rahmen der Ausführungsbeispiele 1 bis 4 durch Erhöhung des Kesselwirkungsgrades eine zusätzliche Wirkungsgradsteigerung um ca. 1% möglich. Ebenso lässt sich eine weitere Wirkungsgraderhöhung durch weitere Maßnahmen wie z.B. eine regenerative Speisewasservorwärmung erzielen.

Ferner führen noch folgende bekannten weiteren Maßnahmen grundsätzlich zu einer weiteren Wirkungsgradsteigerung bei der Energieerzeugung:
- Absenkung des Kondensationsdrucks nach Turbine, erste Isobare vorzugsweise unter 0,5 bar, weiter bevorzugt unter 0,1 bar, weiter bevorzugt zwischen 0,01 und 0,05 bar).
- Eine Brenngaskonditionierung abgestimmt auf eine möglichst emmissionsarme Gesamtverbrennung und Schadstoffausstoß, womit nur eine einfache Abgasreinigung mit geringem Energieverbrauch erforderlich ist.
- Kesselmaterial für energetische Nutzung **7** aus korrosionsfester und/oder hochtemperaturfesten Werkstoffen, verbunden mit einer Dampfüberhitzung auf Temperaturen über 500°C, vorzugsweise 530, 550 oder gar 600°C.

### Weitere Ausführungsbeispiele:

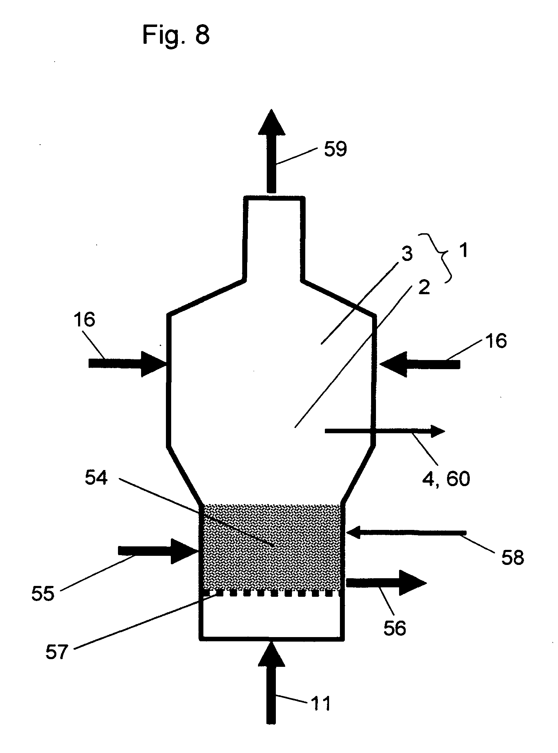

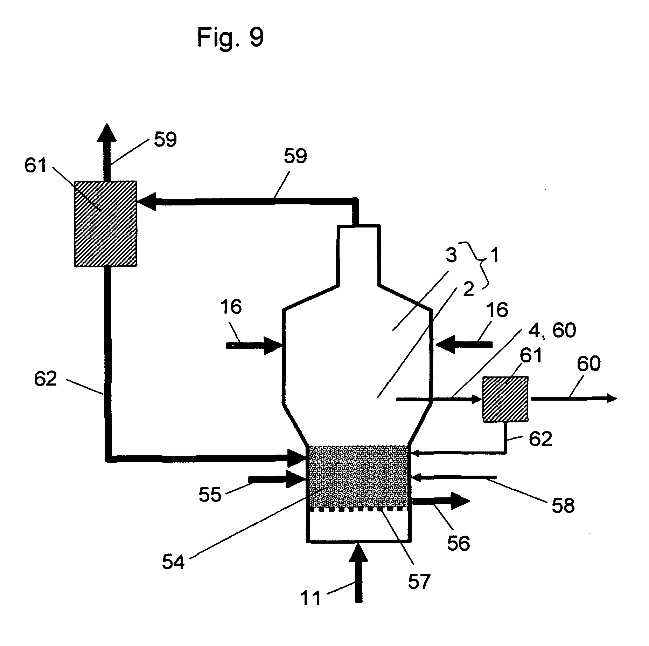

**Fig.8** **und** **9** zeigen je eine Ausführungsform mit einer stationären bzw. zirkulierenden Wirbelschichtfeuerung anstelle einer Rostfeuerung. Die Hauptfeuerung **1** umfasst dabei eine Hauptbrennkammer **2** oberhalb einer bewegten Schüttung von Feststoffpartikeln (Wirbelbett **54**) und eine Hauptrauchgasnachbrennkammer **3** mit Sekundärgaszufuhr **16.** Die unterstöchiometrische Verbrennung/Vergasung des festen Brennstoffes, z.B. Biomasse, Hausmüll oder Ersatzbrennstoff aber auch Kohle erfolgt im Wirbelschicht **54,** das sich durch eine ständige vorzugsweise gemeinsame Brennbettmaterialzufuhr **55** von Brennstoff und Sand und eine Bettabfuhr **56** von Bettasche und Sand erneuert. Das Wirbelbett **54** befindet sich oberhalb eines Düsenbodens **57** mit einer durch diesen in das Wirbelbett flächig eindringenden und unterstöchiometrischen Zufuhr eines sauerstoffhaltigen Primärgases **11.** Die Abzweigung **4** für den heizwertreichen Brenngasteilstrom ist in der Hauptbrennkammer **2** vorzugsweise oberhalb der Wirbelschicht **54** und noch unterhalb der Sekundärgaszufuhr **16** vorgesehen, wobei eine Rückführung **58** von festen Aschebestandteilen und ausgebrannten und energetisch genutztem Rauchgas aus dem abgezweigten Nachverbrennungsstrang in das Wirbelbett und/oder in die Hauptbrennkammer **2** vor Sekundärgaszugabe **16** vorgesehen ist. Die resultierende Abgasatmosphäre der vermischten Rauch-/Abgasströme vor der Hauptrauchgasnachbrennkammer **3** ist vorzugsweise reduzierend. Das zirkulierende Wirbelbett gem. **Fig.9** unterscheidet sich zum stationären Wirbelbett gem. **Fig.8** durch eine Abtrennung und Rezyklierung **62** von Sand und Grobasche aus dem Rauchgasstrom **59** und dem Brenngasteilstrom **60** zurück in das Wirbelbett **57.** Die Abtrennung der genannten Feststoffpartikel erfolgt hierbei durch je einen Zyklon **61.**

Generell ist das Verfahren auch auf Drehrohrfeuerungen übertragbar. Die Brenngasabzweigung und Abgasrückführung erfolgt in der Nachbrennkammer vor Sekundärluftzugabe analog zu den Wirbelschichtsystemen.

### Bezugszeichenliste:

- 1: Hauptfeuerung
- 2: Hauptbrennkammer
- 3: Hauptrauchgasnachbrennkammer
- 4: Abzweigung
- 5: Brenngaskonditionierung
- 6: Brenngasnebenverbrennungskammer
- 7: energetische Verwertung
- 8: Ausmündung
- 9: Festbrennstoffzufuhr
- 10: Schlackeabführung
- 11: Primärgaszufuhr
- 12: Hauptdampferzeuger
- 13: Rohgas
- 14: Hauptrauchgasreinigungsstufen
- 15: Reingas
- 16: Sekundärgaszufuhr
- 17: Brenngasstrom
- 18: Wärmetauscher
- 19: Feststoffaustrag
- 20: Schwebstofffilter
- 21: Abgasrezirkulation
- 22: Rauchgasstrom
- 23: Nebendampfüberhitzer
- 24: Abgas
- 25: Verbrennungsrostlänge
- 26: Wasser-Dampf-Kreislauf
- 27: Dampfturbine
- 28: Rohgasrezirkulationsleitung
- 29: Feuerungsrost
- 30: Neutralisationsmitteleinleitung
- 31: Sekundärteilgasrezirkulationsstrom
- 32: Teilabgasrezirkulationsstrom
- 33: Abgaswärmetauscher
- 34: Sekundärgasstrom
- 35: Gebläse
- 36: einstufige Expansionsturbine
- 37: Kondensator
- 38: Vorwärmer
- 39: Verdampfer
- 40: Vorüberhitzer
- 41: Nassdampfbereich
- 42: Heißdampfbereich
- 43: erste Isobare
- 44: Flüssigkeitsbereich
- 45: zweite Isobare
- 46: Expansionsverbundturbine
- 47: Niederdruckturbine
- 48: Hochdruckturbine
- 49: Hochdruck-Vorüberhitzer
- 50: Niederdruck-Vorüberhitzer
- 51: Hochdruck-Dampfüberhitzer
- 52: Niederdruck-Dampfüberhitzer
- 53: dritte Isobare
- 54: Wirbelschicht
- 55: Bettzufuhr
- 56: Bettabfuhr
- 57: Düsenboden
- 58: Rückführung
- 59: Rauchgasstrom
- 60: Brenngasteilstrom
- 61: Zyklon
- 62: Rezyklierung
- 63: Saugglocke
- 64: Absaugungsrohr
- 65: Lücke

## Patentansprüche

1. Vorrichtung zur Reduzierung von Schadstoffemissionen in Verbrennungsanlagen für feste Brennstoffe mit einem zweistufigem Hauptverbrennungsprozess in einer Hauptfeuerung **(1)** bestehend aus einer Festbrennstoffausbrandzone, Hauptbrennkammer **(2)** und Hauptrauchgasnachbrennkammer **(3)** für Brenngase, sowie einem separaten Nebenverbrennungsstrang für einen Teilstrom der beim Feststoffausbrand gebildeten heizwertreichen Brenngase **(17)** in einer Brenngasnebenverbrennungskammer **(6),** umfassend
a) eine Abzweigung **(4)** des Teilstroms **(17)** des Brenngases zwischen Festbrennstoffausbrandzone und Hauptrauchgasnachbrennkammer,
b) einer nachfolgenden Brennstoffkonditionierung **(5)** des Teilstroms **(17)** mit einer Brenngastemperierung umfassend eine Kühlung des heizwertreichen Brenngasstroms umfassend einen Wärmetauscher oder einen Quench zur Abkühlung sowie Mitteln zur Brenngasreinigung,
c) einer nachfolgenden Brenngasnebenverbrennungskammer **(6)** des Teilstroms **(17)** mit Mitteln zur Zufuhr von sauerstoffhaltigen Sekundärgas und energetischen Verwertung **(7)** sowie
d) einer nachfolgenden Ausmündung **(8)** des Teilstroms **(17)** in die Hauptrauchgasnachbrennkammer.

2. Verfahren zur Reduzierung von Schadstoffemissionen in Verbrennungsanlagen für feste Brennstoffe und/oder feste Brennstoffmischungen mit einem zweistufigem Hauptverbrennungsprozess mit einer Vorrichtung nach Anspruch 1, wobei
a) in der Hauptbrennkammer **(2)** ein Ausbrand des festen Brennstoffs und/oder festen Brennstoffmischungen unter unterstöchiometrischer Primärgaszufuhr **(11)** erfolgt und dabei ein heizwertreiches Brenngas und ein kohlenstoffarmer fester Rückstand gebildet wird,
b) ein Teilstrom des beim Ausbrand des Brennstoffs und/ oder festen Brennstoffmischungen gebildeten heizwertreichen Brenngases vor Eintritt in die Hauptrauchgasnachbrennkammer **(3)** abgezweigt wird, während der verbleibende restliche Brenngastrom **(17),** der nicht abgesaugt wird, die Hauptbrennkammer **(2)** durchströmt,
c) der abgezweigte Teilstrom des heizwertreichen Brenngases den Nebenverbrennungsstrang durchläuft wobei nach einem Durchlauf einer Brenngaskonditionierung **(5)** bestehend aus einer Temperierung, die einen Wärmetauscher **(18)** oder einen Quench umfasst, wobei der abgezweigte Teilstrom des heizwertreichen Brenngases durch Kühlung temperiert wird, und nachfolgend eine Brenngasreinigung durch Abscheidung von Asche- und Rußpartikeln und von korrosiven Brenngasinhaltsstoffen erfolgt, und aus einer nachfolgenden Nebenverbrennung, wobei der abgezweigte Teilstrom des heizwertreichen Brenngases einer Brenngasnebenbrennkammer **(6)** zugeführt und unter Zufuhr eines sauerstoffhaltigen Gases ausgebrannt wird und die dabei gebildeten heißen und korrosionsarmen Abgase einer energetischen Verwertung **(7,23)** zugeführt werden sowie
d) das ausgebrannte und energetisch genutzte Abgas aus dem Nebenverbrennungsstrang der Hauptfeuerung **(1)** vor der Hauptrauchgasnachbrennkammer **(3)** zurückgeführt wird und zusammen mit dem Brenngastrom **(17)** in der Hauptrauchgasnachbrennkammer **(3)** unter überstöchiometrischer Zugabe eines sauerstoffhaltigen Sekundärgases **(16)** ausgebrannt und einem Hauptdampferzeuger **(12)** und einer Hauptrauchgasreinigung **(14)** zugeführt wird.

3. Verfahren nach Anspruch 2, wobei der Ausbrand des festen Brennstoffes in der Festbrennstoffausbrandzone des Hauptverbrennungsprozesses **(1)** auf einem Rost oder in einer Wirbelschicht oder einem Drehrohr durchgeführt wird.

4. Verfahren nach Anspruch 2 oder 3, wobei der im Hauptdampferzeuger erzeugte Dampf nachfolgend einen Nebendampfüberhitzer **(23)** seriell durchströmt und dabei von den heißen korrosionsarmen Abgasen des ausgebrannten Brenngasteilstroms im Rahmen der energetischen Nutzung weiter überhitzt wird.

5. Verfahren nach einem der Ansprüche 2 bis 4, wobei das Abgas nach der energetischen Nutzung **(24)** eine Temperatur aufweist, die über der Brenngastemperatur nach Durchlauf durch die Brenngaskonditionierung **(5)** liegt.

6. Verfahren nach einem der Ansprüche 2 bis 5, wobei Temperatur und thermische Leistung der Brenngasnebenbrennkammer **(6)** durch die Mengenströme und/oder Mengenstromverhältnisse von heizwertreichem Brenngas, des sauerstoffhaltigen Gases und/oder eines rezyklierten Abgases **(21,31)** geregelt werden.

7. Verfahren nach einem der Ansprüche 2 bis 6, wobei die Nebenverbrennung in der Brenngasnebenbrennkammer **(6)** unter einer Zufuhr von vorgewärmtem sauerstoffhaltigem Sekundärgas **(34)** erfolgt.

8. Verfahren nach einem der Ansprüche 2 bis 7, wobei der abgezweigte Teilstrom des heizwertreichen Brenngases bei der Temperierung auf eine Temperatur zwischen 350 und 500°C abgekühlt wird, wobei im Brenngasstrom enthaltene gasförmige flüchtige Alkali- und Metallverbindungen als Feststoffpartikel resublimieren und/oder auf Flugaschepartikeln kondensieren.

9. Verfahren nach Anspruch 8, wobei die Abscheidung von korrosiven Brenngasinhaltsstoffen eine Abfilterung der Flugasche- und Feststoffpartikel mit den resublimierten und kondensierten Alkali- und Metallverbindungen bei Temperaturen von 350-500°C umfasst.

10. Verfahren nach einem der Ansprüche 2 bis 9, wobei die Brenngasrasreinigung zur Abscheidung von korrosiven Brenngasinhaltsstoffen eine Abscheidung von Halogensäuren mittels einer Zudosierung von alkali-, erdalkalihaltigen Neutralisationsmitteln ins Brenngas nach Temperierung **(18)** und anschließender Abscheidung **(20)** des festen Reaktionsproduk-tes umfasst.

11. Verfahren nach Anspruch 10, wobei die Neutralisationsmittel Kalziumhydroxid und/oder Kalziumoxid und/oder Kalziumcarbonat umfassen.

12. Verfahren nach einem der Ansprüche 2 bis 11, wobei die Brenngasreinigung **(20)** zur Abscheidung von korrosiven Brenngasinhaltsstoffen eine Halogensäureabscheidung mittels einer Durchströmung der Brenngase durch einen Festbettabsorber und/oder eine Durchströmung durch eine Absorberpartikelschicht umfasst.

13. Verfahren nach einem der Ansprüche 2 bis 12, wobei bei der Brenngaskonditionierung **(5)** durch Regelung des Massenstromes der Neutralisationsmitteleinleitung **(30)** abhängig von der Halogensäurekonzentration im abgezweigten Teilstrom des heizwertreichen Brenngases eine bevorzugte Abtrennung von Halogensäuren erfolgt, während eine Abtrennung von Schwefelwasserstoff nicht vorgesehen ist und dadurch das HCl/SO₂ -Verhältnis im Abgas nach der Nebenfeuerung **(24)** und im Rauchgas der Hauptfeuerung nach der Hauptrauchgasnachbrennkammer **(3)** erniedrigt wird.

14. Verfahren nach einem der Ansprüche 2 bis 13, **dadurch gekennzeichnet, dass** nach Zuführung und Vermischung des ausgebrannten Abgases aus der Nebenbrennkammer **(6)** mit dem nichtabgesaugten Teilstrom des Brenngases **(17)** vor Eintritt in die Hauptrauchgasnachbrennkammer **(3)** eine reduzierende Atmosphäre vorliegt und dadurch die in der Brenngasnebenverbrennungskammer **(6)** gebildeten Stickoxide NOₓ zu Stickstoff N₂ reduziert werden.

## Claims

1. Device to reduce pollutant emissions in incineration plants for solid fuels with a two-stage main incineration process in a main furnace (1) consisting of a solid fuel burnout zone, main combustion chamber (2) and main flue gas afterburn chamber (3) for fuel gases, and a separate secondary incineration line for a partial flow of the heat value-rich fuelgases (17) formed during the solid burnout in a fuel gas secondary incineration chamber (6) comprising
a) a branch (4) of the partial flow (17) of the fuel gas between the solid fuel burnout zone and the main flue gas afterburn chamber,
b) a subsequent fuel conditioning (5) of the partial flow (17) with a fuel gas temperature control comprising a cooling of the heat value-rich fuel gas flow comprising a heat exchanger or a quench for the cooling and means for fuel gas purification,
c) a subsequent fuel gas secondary incineration chamber (6) of the partial flow (17) with means for the supply of oxygen-containing secondary gas and energy recovery (7) and
d) a subsequent outlet (8) of the partial flow (17) into the main flue gas afterburn chamber.

2. Method to reduce pollutant emissions in incineration plants for solid fuels and / or solid fuel mixtures with a two-stage main incineration process with a device according to claim 1, wherein
a) in the main combustion chamber (2), a burnout of the solid fuel and / or solid fuel mixtures occurs with an under-stoichiometric primary gas supply (11) and thereby a heat value-rich flue gas and a low-carbon solid residue is formed,
b) a partial flow of the heat value-rich fuel gas formed with the burnout of the fuel and / or solid fuel mixtures is branched off before entering the main flue gas afterburn chamber (3), while the remaining residual fuel gas flow (17) which is not extracted, flows through the main combustion chamber (2),
c) the branched-off partial flow of the heat value-rich fuel gas passes through the secondary incineration line wherein, after passing through a fuel gas conditioning (5) comprising a temperature control which comprises a heat exchanger (18) or a quench, wherein the branched-off partial flow of the heat value-rich fuel gas is tempered by cooling, and subsequently a fuel gas purification takes place by separation of ash and soot particles and of corrosive fuel gas components, and also comprises a subsequent secondary incineration, wherein the branched-off partial flow of the heat value-rich fuel gas is fed to a fuel gas secondary combustion chamber (6) and is burnt out while an oxygen-containing gas is being supplied, and the thereby hot and low-corrosion exhaust gases are supplied to an energy recovery (7, 23) and
d) the burnt-out waste gas used for energy, coming from the secondary incineration line of the main furnace (1) is fed back before the main flue gas afterburn chamber (3) and burnt out together with the fuel gas flow (17) in the main flue gas afterburn chamber (3) with the over-stoichiometric addition of an oxygen-containing secondary gas (16) and fed to a main steam generator (12) and a main flue gas purification (14).

3. Method according to claim 2, wherein the burnout of the solid fuel in the solid fuel burnout zone of the main incineration process (1) is carried out on a grating or in a fluidised bed or a rotary kiln.

4. Method according to claim 2 or 3, wherein the steam generated in the main steam generator subsequently flows in series through a secondary steam superheater (23) and is thereby further superheated by the hot low-corrosion exhaust gases of the burnt-out fuel gas partial flow in the context of the energy recovery.

5. Method according to any one of claims 2 to 4, wherein after the energy recovery (24), the waste gas has a temperature which lies above the fuel gas temperature after passing through the fuel gas conditioning (5).

6. Method according to any one of claims 2 to 5, wherein temperature and thermal output of the fuel gas secondary combustion chamber (6) are controlled by the volume flows and / or volume flow ratios of heat value-rich fuel gas, of the oxygen-containing gas and / or of a recycled exhaust gas (21, 31).

7. Method according to any one of claims 2 to 6, wherein the secondary incineration takes place in the fuel gas secondary combustion chamber (6) while pre-heated oxygen-containing secondary gas (34) is supplied.

8. Method according to any one of claims 2 to 7, wherein the branched-off partial flow of the heat value-rich fuel gas is cooled down during the temperature control to a temperature of between 350 and 500°C, wherein gaseous volatile alkali and metal compounds contained in the fuel gas flow re-sublimate as solid particles and / or condense to fly ash particles.

9. Method according to claim 8, wherein the separation of corrosive fuel gas components comprises a filtering-off of the fly ash and solid particles with the re-sublimated and condensed alkali and metal compounds at temperatures of 350 - 500°C.

10. Method according to any one of claims 2 to 9, wherein the fuel gas purification for the separation of corrosive fuel gas components comprises a separation of halogen acids by means of an addition of alkali-containing and alkaline earth-containing neutralisation agents into the fuel gas after temperature control (18) and subsequent separation (20) of the solid reaction product.

11. Method according to claim 10, wherein the neutralisation agents comprise calcium hydroxide and / or calcium oxide and / or calcium carbonate.

12. Method according to any one of claims 2 to 11, wherein the fuel gas purification (20) for the separation of corrosive fuel gas components comprises a halogen acid separation by means of the fuel gases flowing through a fixed-bed absorber and / or flowing through an absorber particle layer.

13. Method according to any one of claims 2 to 12, wherein, in the fuel gas conditioning (5) by regulating the mass flow of the neutralisation agent introduction (30) depending on the halogen acid concentration in the branched-off partial flow of the heat value-rich fuel gas, a preferred separation of halogen acids takes place, while a removal of hydrogen sulphide is not provided and thereby the HCl /SO₂ ratio in the waste gas after the secondary furnace (24) and in the flue gas of the main furnace is lowered after the main flue gas afterburn chamber (3).

14. Method according to any one of claims 2 to 13, **characterised in that**, after the supply and mixing of the burnt-out waste gas from the secondary combustion chamber (6) with the non-extracted partial flow of the fuel gas (17) before entry into the main flue gas afterburn chamber (3), a reducing atmosphere is present and thereby the nitrous gases NOₓ formed in the fuel gas secondary incineration chamber (6) are reduced to nitrogen N₂.

## Revendications

1. Dispositif permettant de réduire les émissions de substances polluantes dans des installations de combustion de combustibles solides par un procédé de combustion principal en deux étapes dans un brûleur principal (1) d'une zone de brûlage du combustible solide, constitué d'une chambre de combustion principale (2) et d'une chambre de postcombustion des gaz de fumée principale (3) pour le gaz combustible, ainsi que d'une ligne de combustion auxiliaire séparée pour un flux partiel de gaz combustibles (17) ayant une puissance calorifique élevée, formée lors du brûlage des solides dans une chambre combustible auxiliaire (6) du gaz combustible, comportant :
a) une dérivation (4) du flux partiel (17) du gaz combustible entre la zone de brûlage du combustible solide et la chambre de postcombustion principale des gaz de fumée,
b) un conditionnement (5) du gaz combustible du flux partiel (17) ultérieur avec un équilibrage de la température du gaz combustible comprenant un refroidissement du flux de gaz combustible ayant une puissance calorifique élevée renfermant un échangeur de chaleùr ou un refroidisseur à injection ainsi que des moyens de nettoyage du gaz combustible,
c) une chambre de combustion auxiliaire du gaz combustible (6) du flux partiel (17) située en aval comportant des moyens de fourniture d'un gaz secondaire renfermant de l'oxygène et d'exploitation énergétique (7), ainsi qu'
d) une sortie (8) du flux partiel (17) dans la chambre de postcombustion principale des gaz de fumée située en aval.

2. Procédé permettant de réduire les émissions de substances polluantes dans des installations de combustion de combustibles solides et/ou de mélanges de combustibles solides, par un procédé de combustion principale en deux étapes à l'aide d'un dispositif conforme à la revendication 1, selon lequel
a) dans la chambre de combustion principale (2) on effectue un brûlage du combustible solide et/ou du mélange de combustibles solides avec une alimentation en gaz primaire (11) sous-stoechiométrique, et on forme un gaz combustible ayant une puissance calorifique, élevée et un résidu solide pauvre en carbone,
b) on dérive un flux partiel du gaz combustible ayant une puissance calorifique élevée formé lors du brûlage du combustible et/ou du mélange de combustibles solides en amont de l'entrée dans la chambre de postcombustion principale (3) des gaz de fumée, tandis que le flux de gaz combustible résiduel (17) non aspiré traverse la chambre de combustion principale (2),
c) le flux partiel dérivé du gaz combustible ayant une puissance calorifique élevée s'écoule dans la ligne de combustion auxiliaire, dans laquelle après avoir traversé des moyens de conditionnement du gaz combustible (5) constitués de moyens d'équilibrage de la température qui renferment un échangeur de chaleur (18) ou un injecteur de refroidissement, lé flux partiel dérivé du gaz combustible ayant une puissance calorifique élevée est équilibré en température par refroidissement, le gaz combustible est ensuite nettoyé par séparation de cendres de particules de noir de carbone et de constituants corrosifs, et soumis ensuite à une combustion auxiliaire, le flux partiel dérivé du gaz combustible ayant une puissance calorifique élevée étant transféré dans une chambre de combustion auxiliaire (6) et étant brûlé avec fourniture d'un gaz renfermant de l'oxygène, et les gaz résiduels chauds et pauvres en constituants corrosifs ainsi formés étant transférés à des moyens d'exploitation énergétique (7, 23), et
d) les gaz résiduels brûlés et énergétiquement utilisés provenant de la ligne de combustion auxiliaire sont ramenés dans le brûleur principal (1) en amont de la chambre de postcombustion principale des gaz de fumée (3) et sont brûlés avec le flux du gaz combustible (17) dans la chambre de postcombustion principale des gaz de fumée (3) avec addition sous-stoechiométrique d'un gaz secondaire (16) renfermant de l'oxygène et sont transférés vers un générateur de vapeurs principal (12) et à des organes purification principaux des gaz de fumée (14).

3. Procédé conforme à la revendication 2, selon lequel le brûlage du combustible solide dans la zone de brûlage du combustible solide du procédé de combustion principal (1) est mis en oeuvre sur une grille, ou dans un lit fluidisé ou dans un tube rotatif.

4. Procédé conforme à la revendication 2 ou 3, selon lequel la vapeur produite dans le générateur de vapeurs principal s'écoule ensuite en série dans un surchauffeur de vapeur auxiliaire (23) et est ensuite encore surchauffée par les gaz d'échappement chauds pauvres en produits corrosifs du flux partiel de gaz combustible brûlé dans le cadre de l'utilisation énergétique.

5. Procédé conforme à l'une des revendications 2 à 4, selon lequel après l'utilisation énergétique (24) les gaz d'échappement ont une température qui est supérieure à la température du gaz combustible après son passage dans les organes de conditionnement (5).

6. Procédé conforme à l'une des revendications 2 à 5, selon lequel la charge en température et thermique de la chambre combustible auxiliaire du gaz combustible (6) est régulée par le flux et/ou le rapport des flux du gaz combustible à puissance calorifique élevée, du gaz renfermant de l'oxygène et/ou des gaz d'échappement (21, 31) recyclés.

7. Procédé conforme à l'une des revendications 2 à 6, selon lequel la combustion auxiliaire dans la chambre de combustion auxiliaire (6) du gaz combustible s'effectue avec addition de gaz secondaire renfermant de l'oxygène (34) préchauffé.

8. Procédé conforme à l'une des revendications 2 à 7, selon lequel le flux partiel dérivé du gaz combustible ayant une puissance calorifique élevée est refroidi à une température située entre 350 et 500°C, lors de l'équilibrage de la température, les composés alcalins ou métalliques volatils gazeux renfermés dans le flux de gaz combustible étant soumis à une sublimation sous la forme de particules solides et/ou se condensant sur des particules de cendres volantes.

9. Procédé conforme à la revendication 8, selon lequel la séparation de constituants corrosifs du gaz combustible comporte une filtration des particules de cendres volantes et de matières solides avec les composés alcalins et métalliques ayant été soumis à une resublimation ou à une condensation à des températures de 350-500°C.

10. Procédé conforme à l'une des revendications 2 à 9, selon lequel la purification du gaz combustible pour séparer les composés corrosifs renfermés dans ce gaz comporte une séparation d'acides halogénés par addition dosée d'agents de neutralisation renfermant des composés alcalin ou alcalino-terreux dans le gaz combustible après l'équilibrage de la température (18) puis la séparation (20) des produits réactionnels solides.

11. Procédé conforme à la revendication 10, selon lequel les agents de neutralisation renferment de l'hydroxyde de calcium et/ou de l'oxyde de calcium et/ou du carbonate de calcium.

12. Procédé conforme à l'une des revendications 2 à 11, selon lequel le nettoyage (20) du gaz combustible pour séparer les substances corrosives renfermées dans ce gaz comporte une séparation des acides halogénés par passage du gaz combustible dans un absorbeur à lit fixe et/ou au travers d'une couche de particules absorbantes.

13. Procédé conforme à l'une des revendications 2 à 12, selon lequel lors du conditionnement du gaz combustible (5) par régulation du flux massique de l'alimentation en agent de neutralisation (30) en fonction de la concentration en acides halogénés dans le flux partiel dérivé du gaz combustible ayant une puissance calorifique élevée on effectue une séparation préférentielle des acides halogénés alors qu'une séparation d'acide sulfurique n'est pas prévue, et ainsi, le rapport HCl/SO₂ dans les gaz d'échappement après le brulage auxiliaire (24) et dans les gaz de fumée du brûlage principal après la chambre de postcombustion principale (3) des gaz de fumée, est diminué.

14. Procédé conforme à l'une des revendications 2 à 13,
**caractérisé en ce qu'**
après l'alimentation et le mélange des gaz d'échappement brûlés provenant de la chambre de combustion auxiliaire (6) avec le flux partiel non aspiré du gaz combustible (17), avant l'entrée dans la chambre de postcombustion (3) principale des gaz de fumée, il règne une atmosphère réductrice, et ainsi, les oxydes d'azote NOₓ formés dans la chambre de combustion auxiliaire du gaz combustible (6) sont réduit en azote N₂.
